# EUROPÄISCHE PATENTSCHRIFT

(11) **EP 1 570 031 B1**
(45) Veröffentlichungstag und Bekanntmachung des Hinweises auf die Patenterteilung: **21.03.2012**
(21) Anmeldenummer: 03785698.6
(22) Anmeldetag: 01.12.2003
(51) Int. Cl.: C10L 1/22, C10M 159/14, C10M 133/08, C07C 215/50, C10M 133/06, C10M 133/10, C10M 133/38

(54) **VERWENDUNG VON AMINEN UND/ODER MANNICH-ADDUKTEN IN KRAFT- UND SCHMIERSTOFFZUSAMMENSETZUNGEN FÜR DIREKTEINSPRITZENDE OTTOMOTOREN**
USE OF AMINES AND/OR MANNICH ADDUCTS IN FUEL AND LUBRICANT COMPOSITIONS FOR DIRECT INJECTION SPARK IGNITION ENGINES
UTILISATION D'AMINES ET/OU DE PRODUITS D'ADDITION DE MANNICH DANS DES COMPOSITIONS DE CARBURANT ET DE LUBRIFIANT UTILISEES DANS DES MOTEURS A ALLUMAGE COMMANDE ET INJECTION DIRECTE

(30) Priorität: 02.12.2002 DE 10256161
(43) Veröffentlichungstag der Anmeldung: 07.09.2005
(73) Patentinhaber: BASF SE, 67056 Ludwigshafen (DE)
(72) Erfinder: LANGE, Arno, 67098 Bad Dürkheim (DE); RATH, Hans Peter, 67269 Grünstadt (DE); WALTER, Marc, 67227 Frankenthal (DE); BERGEMANN, Marco, Tokyo 102-8570 (JP); SCHMIDT, Helmut, 67071 Ludwigshafen (DE)
(86) Internationale Anmeldenummer: PCT/EP2003/013512
(87) Internationale Veröffentlichungsnummer: WO 2004/050806

(56) Entgegenhaltungen:
- EP-A- 1 293 553
- WO-A-00/20537
- WO-A-01/42399
- WO-A-02/090471
- WO-A-03/078553
- US-A- 4 231 759
- US-A- 5 634 951
- US-A- 5 725 612
- US-A- 5 876 468

## Beschreibung

Die vorliegende Erfindung betrifft die Verwendung von Aminen und/ oder Mannich-Addukten als Detergenzien und/oder Dispergatoren in Kraft- stoffzusammensetzungen für direkteinspritzende Ottomotoren.

Direkteinspritzende Otto-Motoren gewinnen zunehmend an Bedeutung, da sie insbesondere im Magerbereich, d. h. bei einem Lambda-Wert von ungefähr 1 oder größer eine bessere Kraftstoffausnutzung und gleichzeitig eine Steigerung der Motorleistung ermöglichen. Damit einher geht eine verringerte Kohlendioxid-Emission im Vergleich zu konventionellen Otto-Motoren.

Die Einspritzdüsen in direkteinspritzenden Otto-Motoren befinden sich in der Verbrennungskammer und sind somit extremen Bedingungen ausgesetzt. Unter diesen Bedingungen findet eine starke Zersetzung und Oxidation des Brennstoffs statt und es bilden sich vermehrt Ablagerungen. Ablagerungsprobleme betreffen hauptsächlich die Einspritzdüsen, jedoch auch die Einlassventile sowie den gesamten Verbrennungsraum. Ablagerungen an den Einspritzdüsen verringern die Kraftstoffzufuhr und verändern das Einspritzverhalten. Eine geringfügig verringerte Kraftstoffzufuhr kann durch entsprechende elektronische Steuerung kompensiert werden; bei stärkerer Zufuhrverringerung und bei Veränderung des Einspritzverhaltens kann jedoch nicht mehr gegengesteuert werden. Für eine optimale Kraftstoffausnutzung und Leistungssteigerung ist jedoch ein einwandfreies Einspritzverhalten unabdingbar. Daher ist die Bildung von Ablagerungen weitestgehend zu vermeiden. Im Gegensatz zu herkömmlichen Motoren, bei denen eher fette Gemische Ablagerungen bedingen, führen bei direkteinspritzenden Otto-Motoren insbesondere magere Gemische zu Ablagerungen.

Die WO 01/42399 beschreibt die Verwendung von Mannich-Basen als Kraftstoffadditive zur Verhinderung von Ablagerungen in direkteinspritzenden Otto-Motoren. Die Untersuchungen wurden mit Mannich-Basen, die auf einem mit einem von einem niedrigreaktiven Polyisobuten abgeleiteten Rest substituierten Phenol basierten, in einem kraftstoffreichen Gemisch (Lambda-Wert 0,8) durchgeführt. Kommerziell erhältliche direkteinspritzende Otto-Motoren arbeiten jedoch mit kraftstoffärmeren Gemischen, um die geforderten Benzineinsparungen zu erzielen. Außerdem würde ein kraftstoffreiches Gemisch, beispielsweise mit einem Lambda-Wert von 0,8, die Funktion eines üblichen Abgaskatalysators beeinträchtigen, wobei die gesetzlich festgelegten Abgashöchstwerte überschritten werden können. Die in der WO 01/42399 erzielten Ergebnisse sind noch nicht befriedigend; insbesondere versagen die dort beschriebenen Mannich-Basen bei Betrieb des Motors im Lambda-Bereich von 0,9 bis 9. Außerdem handelt es sich beim dort verwendeten Motor nicht um einen modernen Direkteinspritzer, was daran ersichtlich ist, dass ein Motor mit sogenannten flat top pistons verwendet wird. Der Aufbau dieser Zylinder entspricht jedoch nicht der speziellen Zylindergeometrie in modernen Direkteinspritzern, die für eine gleichmäßige Kraftstoffverteilung entscheidend ist.

Aufgabe der vorliegenden Erfindung war es daher, geeignete Kraftstoffadditive bereitzustellen, die Ablagerungen in direkteinspritzenden Otto-Motoren, auch beim Betrieb des Motors im Lambda-Bereich von 0,9 bis 9, wirksam verhindern.

Die Aufgabe wurde gelöst durch die Verwendung beschrieben im Wortlant des Anspruchs 1, sowie durch das Verfahren beschriben im Anspruch 10.

Diese erfindungsgemäße Verwendung wird nachfolgend als Verwendungsvariante 1 bezeichnet.

Im Betrieb von handelsüblichen direkteinspritzenden Otto-Motoren werden Zyklen unterschiedlicher Lambda-Werte durchlaufen. In Verwendungsvariante 1 werden die Komponenten A und/oder B in Kraft-und Schmierstoffzusammensetzungen für direkteinspritzende Ottomotoren verwendet, wobei der Motor erfindungsgemäß zu mehr als 80 % der Betriebszeit bei einem Lambda-Wert von wenigstens 0,9 bis einschließlich 9, vorzugsweise von 0,95 bis 8 und insbesondere von 0,97 bis 6, betrieben wird. Unter Lambda-Wert versteht man das Verhältnis von in eine Verbrennungskammer eingeführter Luftmenge zu der zur vollständigen Verbrennung theoretisch benötigter Luftmenge. Dabei bezeichnet man ein Gemisch mit einem Lambda-Wert von kleiner 1 als fett und mit einem Lambda-Wert von größer 1 als mager.

In Verwendungsvariante 1 beträgt das Molekularge-wicht der Amine NR¹R²R³ der Komponente A bzw. die Summe der Molekulargewichte der Reste NR¹R² im Mannich-Addukt I der Komponente B 120 bis 1000 g/mol und insbesondere 180 bis 600 g/mol. Bei den Aminen der Komponente A beträgt das Molekulargewicht ganz besonders bevorzugt 180 bis 300 g/mol.

R⁸ steht für einen Polyisobuten-Rest, der sich vorzugsweise von sogenannten "reaktiven" Poylisobutenen ableitet. Bezüglich der Definition von reaktiven Polyisobutenen und den bevorzugten Ausführungen hiezu wird auf die nachfolgenden Ausführungen zu R⁸ verwiesen.

Bei Verwendungsvariante 1 steht in obigen Definitionen für die Gruppen R¹, R², R³, R⁴, R⁵, R⁶ und R⁷ C₁-C₂₀-Alkyl für verzweigtes oder unverzweigtes Alkyl, insbesondere für Methyl, Ethyl, n-Propyl, Isopropyl, n-Butyl, sec-Butyl, Isobutyl, tert-Butyl, 1-, 2- oder 3-Pentyl, 1-, 2-, 3- oder 4-Methylbutyl, 1,1-, 1,2-, 1,3- oder 2,2-Dimethylpropyl, 1-, 2- oder 3-Hexyl, 2-, 3- oder 4-Methylpentyl, 1,1-, 1,2-, 1,3-, 2,2-, 2,3- oder 3,3-Dimethylbutyl, 2-Ethylbutyl, 1-, 2-, 3- oder 4-Heptyl, 2-, 3-, 4- oder 5-Methylhexyl, 1,1-, 1,2-, 1,3-, 1,4-, 2,2-, 2,3-, 2,4-, 3,3-, 3,4- oder 4,4-Dimethylpentyl, 2- oder 3-Ethylpentyl, 1-, 2-, 3- oder 4-Octyl, 2-, 3-, 4-, 5- oder 6-Methylhexyl, 1,1-, 1,2-, 1,3-, 1,4-, 1,5-, 2,2-, 2,3-, 2,4-, 2,5-, 3,3-, 3,4-, 3,5-, 4,4-, 4,5- oder 5,5-Dimethylhexyl, 2-, 3- oder 4-Ethylhexyl, Nonyl, Decyl, Undecyl, Dodecyl, Tridecyl, Tetradecyl, Pentadecyl, Hexadecyl, Heptadecyl, Octadecyl, Nonadecyl oder Eicosyl. Die Alkylgruppe kann auch durch einen oder mehrere C₃-C₂₀-Cycloalkylreste substituiert sein.

Bilden 2 Alkylgruppen gemeinsam mit dem Stickstoffatom der NR¹R²-Gruppe des Mannich-Addukts I bzw. des Amins NR¹R²R³ einen Ring, wobei die Alkylgruppe durch eine Gruppierung O oder NR⁴ unterbrochen sein kann, so steht der Ring beispielsweise für Piperidin, Piperazin oder Morpholin.

In obigen Definitionen für die Gruppen R¹, R², R³, R⁴, R⁵, R⁶ und R⁷ steht die C₃-C₂₀-Cycloalkyl-Gruppe beispielsweise für Cyclopropyl, Cyclopentyl, Cyclohexyl, Cyclooctyl oder Cyclodecyl. Die Cycloalkylgruppe kann durch eine oder mehrere C₁-C₂₀-Alkylgruppen substituiert sein. Beispiele hierfür sind 3-Methylcyclopentyl und 4-Methylcyclohexyl.

In obigen Definition für die Gruppen R⁹ und R¹⁰ steht C₁-C₆-Alkyl insbesondere für Methyl, Ethyl, n-Propyl, Isopropyl, n-Butyl, sec-Butyl, Isobutyl, tert-Butyl, 1-, 2- oder 3-Pentyl, 1-, 2-, 3-oder 4-Methylbutyl, 1,1-, 1,2-, 1,3- oder 2,2-Dimethylpropyl, 1-, 2- oder 3-Hexyl, 2-, 3- oder 4-Methylpentyl, 1,1-, 1,2-, 1,3-, 2,2-, 2,3- oder 3,3-Dimethylbutyl oder 2-Ethylbutyl.

Die Reste R¹, R² und R³ stehen vorzugsweise jeweils unabhängig für verzweigtes oder unverzweigtes C₆-C₂₀-Alkyl, wie 1-, 2- oder 3-Hexyl, 2-, 3- oder 4-Methylpentyl, 1,1-, 1,2-, 1,3-, 2,2-, 2,3-oder 3,3-Dimethylbutyl, 2-Ethylbutyl, 1-, 2-, 3- oder 4-Heptyl, 2-, 3-, 4- oder 5-Methylhexyl, 1,1-, 1,2-, 1,3-, 1,4-, 2,2-, 2,3-, 2,4-, 3,3-, 3,4- oder 4,4-Dimethylpentyl, 2- oder 3-Ethylpentyl, 1-, 2-, 3- oder 4-Octyl, 2-, 3-, 4-, 5- oder 6-Methylhexyl, 1,1-, 1,2-, 1,3-, 1,4-, 1,5-, 2,2-, 2,3-, 2,4-, 2,5-, 3,3-, 3,4-, 3,5-, 4,4-, 4,5- oder 5,5-Dimethylhexyl, 2-, 3- oder 4-Ethylhexyl, Nonyl, Decyl, Undecyl, Dodecyl, Tridecyl, Tetradecyl, Pentadecyl, Hexadecyl, Heptadecyl, Octadecyl, Nonadecyl oder Eicosyl, für C₆-C₂₀-Cycloalkyl, wie Cyclohexyl, Cyclooctyl oder Cyclodecyl, oder für 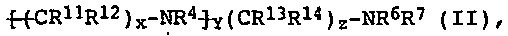 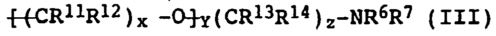 oder 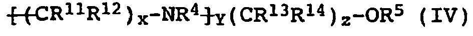 worin R⁴, R⁵, R¹¹, R¹², R¹³ und R¹⁴ unabhängig voneinander für H oder C₁-C₆-Alkyl stehen,

R⁶ und R⁷ unabhängig voneinander für H, C₁-C₆-Alkyl oder C₁-C₆Hydroxyalkyl stehen x und z unabhängig voneinander für eine Zahl von 1 bis 20 stehen und
y für eine Zahl von 0 bis 10 steht.

In obiger Definition für die Gruppen R⁴, R⁵, R⁶, R⁷, R¹¹, R¹², R¹³ und R¹⁴ steht C₁-C₆-Alkyl insbesondere für Methyl, Ethyl, n-Propyl, Isopropyl, n-Butyl, sec-Butyl, Isobutyl, tert-Butyl, 1-, 2-oder 3-Pentyl, 1-, 2-, 3- oder 4-Methylbutyl, 1,1-, 1,2-, 1,3-oder 2,2-Dimethylpropyl, 1-, 2- oder 3-Hexyl, 2-, 3- oder 4-Methylpentyl, 1,1-, 1,2-, 1,3-, 2,2-, 2,3- oder 3,3-Dimethylbutyl oder 2-Ethylbutyl.

R¹¹, R¹², R¹³ und R¹⁴ stehen vorzugsweise für H.

In Verwendungsvariante 1 sind geeignete Amine der Komponente A sowohl Monoamine, d. h. Amine mit nur einer Aminfunktion im Molekül, als auch Polyamine, d. h. Amine mit wenigstens zwei Aminfunktionen im Molekül. Vorzugsweise wird die Komponente A in beiden Varianten nicht alleine verwendet, wenn es sich um ein Alkylamin, speziell um ein Monoalkylamin, handelt. Insbesondere lineare Monoalkylamine werden nicht alleine verwendet.

Geeignete Monoamine sind sowohl primäre als auch sekundäre oder tertiäre Amine. Primäre Amine sind solche, in denen zwei der Reste R¹, R² und R³ für H stehen. Für beide Verwendungsvarianten 1 und 2 geeignete primäre Monoamine sind beispielsweise Octylamin, 2-Ethylhexylamin, Nonylamin, Decylamin, Undecylamin, Dodecylamin, Tridecylamin, Tetradecylamin, Pentadecylamin, Hexadecylamin, Heptadecylamin, Octadecylamin, Nonadecylamin, Eicosylamin sowie Cyclooctylamin und Cyclodecylamin. In Verwendungsvariante 1 sind darüberhinaus geeignete primäre Amine Methylamin, Ethylamin, Propylamin, Butylamin, Pentylamin, Hexylamin und Heptylamin. Sekundäre Amine sind solche, in denen einer der Reste R¹, R² und R³ für H steht. Für beide Verwendungsvarianten 1 und 2 geeignete sekundäre Monoamine sind beispielsweise Dibutylamin, Diisobutylamin, Di-tert-butylamin, Dipentylamin, Dihexylamin, Diheptylamin, Dioctylamin, Di(2-ethylhexylamin), Dinonylamin und Didecylamin sowie N-Methylcyclohexylamin, N-Ethylcyclohexylamin und Dicyclohexylamin. In Verwendungsvariante 1 sind darüberhinaus geeignete sekundäre Amine Dimethylamin, Diethylamin, Dipropylamin und Diisopropylamin. Tertiäre Amine sind solche, in denen keiner der drei Reste R¹, R² und R³ für H steht. Für beide Verwendungsvarianten 1 und 2 geeignete tertiäre Amine sind beispielsweise Tripropylamin, Triisopropylamin, Tributylamin, Tripentylamin, Trihexylamin, Triheptylamin, Trioctylamin, Trinonylamin und Tridecylamin sowie N-Methyldicyclohexylamin und N-Ethyldicyclohexylamin. In Verwendungsvariante 1 sind darüberhinaus geeignete tertiäre Amine Trimethylamin und Triethylamin. Geeignet sind auch alle Isomere der vorstehend genannten Amine. Bevorzugte Monoamine sind sekundäre Amine, insbesondere solche, in denen die beiden Reste, die nicht für H stehen, gleich sind. Bevorzugt verwendet man auch Gemische von Monoaminen, insbesondere großtechnisch zugänglicher Amingemische, wie Fettamine, wie sie beispielsweise in Ullmanns Encyclopedia of Industrial Chemistry, 6th edition, 2000, electronic release, Kapitel "Amines, aliphatic" beschrieben werden, worauf hiermit in vollem Umfang Bezug genommen wird.

Für Verwendungsvariante 1 geeignete cyclische Monoamine sind beispielsweise Pyrrolidin, Piperidin und Morpholin.

Für beide Verwendungsvarianten 1 und 2 geeignete Polyamine sind Amine der Formel NR¹R²R³, worin wenigstens einer der Reste R¹, R² oder R³ für einen Rest der Formel II, III oder IV steht 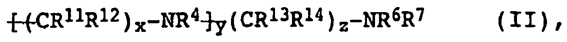 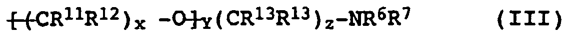 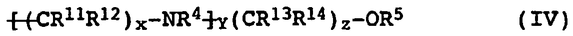 worin
R⁴, R⁵, R¹¹, R¹², R¹³ und R¹⁴ jeweils unabhängig für H oder C₁-C₆-Alkyl stehen;
R⁶, R⁷, R¹⁵ und R¹⁶ jeweils unabhängig für H, C₁-C₆-Alkyl oder C₁-C₆-Hydroxyalkyl stehen,
x und z jeweils unabhängig für eine Zahl von 1 bis 20 stehen und
y für eine Zahl von 0 bis 10 steht, wobei in Formel IV y nicht für 0 stehen darf.

Bevorzugt verwendet man als Polyamin ein Amin, bei dem wenigstens ein Rest R¹, R² oder R³ für einen Rest der Formel II steht. Bevorzugt sind Reste II, in denen R⁴, R¹¹, R¹², R¹³ und R¹⁴ für H stehen, x und z für eine Zahl von 1 bis 8 stehen und y für eine Zahl von 0 bis 10 steht. Beispiele für derartige Polyamine sind Triethylentetramin, Tetraethylenpentamin, Pentaethylenhexamin, Dipropylentriamin, Tripropylentetramin, Tetrapropylenpentamin, Dibutylentriamin, Tributylentetramin, Tetrabutylenpentamin, N,N-Dipro-pylmethylendiamin, N,N-Dipropylethylen-1,2-diamin, N,N-Diethylpropylen-1,3-diamin, N,N-Dipropylpropylen-1,3-diamin, N,N-Die-thylbutylen-1,4-diamin, N,N-Dipropylbutylen-1,4-diamin, N,N-Dime-thylpentylen-1,3-diamin, N,N-Diethylpentylen-1,5-diamin, N,N-Di-propylpentylen-1,5-diamin, N,N-Dimethylhexylen-1,6-diamin, N,N-Diethylhexylen-1,6-diamin, N,N-Dipropylhexylen-1,6-diamin, Bis[2-(N,N-Dimethylamino)ethyl]amin, Bis[2-(N,N-Dipropyla-mino)ethyl]amin, Bis[3-(N,N-Dimethylamino)propyl]amin, Bis[3-(N,N-Diethylamino)propyl]amin, Bis[3-(N,N-Dipropylamino)propyl]amin, Bis[4-(N,N-Dimethylamino)butyl]amin, Bis[4-(N,N-Diethyl-amino)butyl]amin, Bis[4-(N,N-Dipropylamino)butyl]amin, Bis[5-(N,N-Dimethylamino)pentyl]amin, Bis[5-(N,N-Diethylamino)pentyl]amin, Bis[5-(N,N-Dipropylamino)pentyl]amin, Bis[6-(N,N-Dimethy-lamino)hexyl]amin, Bis[6-(N,N-Diethylamino)hexyl]amin, Bis[6-(N,N-Dipropylamino)hexyl]amin, Tris[2-(N,N-Dimethyl-amino)ethyl]amin, Tris[2-(N,N-Dipropylamino)ethyl]amin, Tris[3-(N,N-Dimethylamino)propyl]amin, Tris[3-(N,N-Diethyl-amino)propyl]amin, Tris[3-(N,N-Dipropylamino)propyl]amin, Tris[4-(N,N-Dimethylamino)butyl]amin, Tris[4-(N,N-Diethylamino)butyl]amin, Tris[4-(N,N-Dipropylamino)butyl]amin, Tris[5-(N,N-Dime-thylamino)pentyl]amin, Tris5-(N,N-Diethylamino)pentyl]amin, Tris[5-(N,N-Dipropylamino)pentyl]amin, Tris[6-(N,N-Dimethyl-amino)hexyl]amin, Tris[6-(N,N-Diethylamino)hexyl]amin, Tris[6-(N,N-Dipropylamino)hexyl]amin und dergleichen. In Verwendungsvariante 1 sind darüberhinaus Ethylendiamin, Diethylentriamin und N,N-Dimethylpropylen-1,3-diamin geeignet. Hierunter in beiden Verwendungsvarianten 1 und 2 bevorzugt sind Triethylentetramin, Tetraethylenpentamin und Bis[3-N,N-Dimethylamino)propyl]amin. In Verwendungsvariante 1 sind darüberhinaus Diethylentriamin und N,N-Dimethylpropylen-1,3-diamin bevorzugt.

Für Verwendungsvariante geeignete cyclische Polyamine sind beispielsweise Diethylpiperazin und N,N',N''-Tris(N,N-dimethyl-amino)propylhexahydro-sym-triazin.

In Verwendungsvariante 1 steht im Mannich-Addukt I der Komponente B R⁹ vorzugsweise für eine C₁-C₄-Alkylgruppe, wie Methyl, Ethyl, n-Propyl, Isopropyl, n-Butyl, sec-Butyl, Isobutyl oder tert-Butyl. Besonders bevorzugt steht R⁹ für Methyl oder Ethyl, insbesondere für Methyl.

Die Variable m steht in Abhängigkeit der Anzahl der Reste (CHR¹⁰-NR¹R²) (d. h. von n) für eine Zahl von 0 bis (4-n). Vorzugsweise steht m für eine Zahl von 0 bis 2, besonders bevorzugt für 0 oder 1 und speziell für 0.

R¹⁰ steht für H oder C₁-C₆-Alkyl, vorzugsweise für H.

R¹ und R² stehen unabhängig voneinander für H, C₁-C₂₀-Alkyl oder C₃-C₂₀-Cycloalkyl, wobei zwei Alkylreste auch gemeinsam mit dem Stickstoffatom, an das sie gebunden sind, einen Ring bilden können und wobei die Alkyl- und Cycloalkylreste, wie vorstehend beschrieben, durch eine oder mehrere Gruppen O oder NR⁴ unterbrochen und/oder durch eine oder mehrere Gruppen OR⁵ oder NR⁶R⁷ substituiert sein können, wobei R⁴, R⁵, R⁶ und R⁷ unabhängig voneinander wie R¹ und R² definiert sind. In Verwendungsvariante 1 beträgt die Summe des Molekulargewichts von n Resten NR¹R² 120 bis 1000 g/mol, besonders bevorzugt 120 bis 800 g/mol, stärker bevorzugt 180 bis 600 g/mol und insbesondere 230 bis 600 g/mol. Vorzugsweise stehen R¹ und R² nicht gleichzeitig für H.

In Verwendungsvariante 1 stehen R¹ und R² unabhängig voneinander vorzugsweise für H, C₆-C₂₀-Alkyl, C₆-C₂₀-Cycloalkyl oder einen Rest der nachstehenden Formeln II bis IV 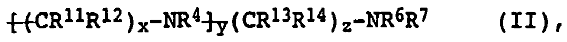 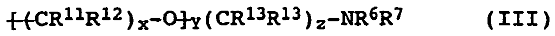 und 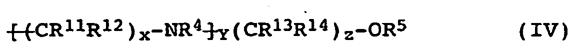 worin
R⁴, R⁵, R¹¹, R¹², R¹³ und R¹⁴ jeweils unabhängig für H oder C₁-C₆-Alkyl stehen;
R⁶ und R⁷ jeweils unabhängig für H, C₁-C₆-Alkyl oder C₁-C₆-Hydroxyalkyl stehen,
x und z jeweils unabhängig für eine Zahl von 1 bis 20, vorzugsweise von 1 bis 6, stehen und
y für eine Zahl von 0 bis 10 steht.

R¹¹, R¹², R¹³ und R¹⁴ stehen vorzugsweise für H.

R⁴ und R⁵ stehen vorzugsweise für H oder C₁-C₆-Alkyl, besonders bevorzugt für H oder Methyl.

R⁶ und R⁷ stehen vorzugsweise für H, Methyl, Ethyl, Propyl, Isopropyl, Butyl, sec-Butyl, Isobutyl, tert-Butyl, Pentyl, Hexyl, Hydroxymethyl, 2-Hydroxyethyl oder 3-Hydroxypropyl und besonders bevorzugt für Methyl.

Vorzugsweise stehen R¹ und R² für den gleichen Rest. In einer besonders bevorzugten Ausführungsform stehen sowohl R¹ als auch R² für einen Rest der Formel II, worin y für 0 steht, z für eine Zahl von 3 bis 6 steht, R¹³ und R¹⁴ für H stehen und sowohl R⁶ als auch R⁷ für Methyl, Ethyl, Propyl, Hydroxymethyl oder Hydroxyethyl stehen. Speziell steht z für 3 und R⁶ und R⁷ stehen für Methyl, d. h. NR¹R² steht speziell für N[(CH₂)₃N(CH₃)₂]₂.

In einer weiteren bevorzugten Ausführungsform stehen R¹ und R³ für einen C₆-C₁₀-Alkylrest, wie 1-, 2- oder 3-Hexyl, 2-, 3- oder 4-Methylpentyl, 1,1-, 1,2-, 1,3-, 2,2-, 2,3- oder 3,3-Dimethylbutyl, 2-Ethylbutly, 1-, 2-, 3- oder 4-Heptyl, 2-, 3-, 4- oder 5-Methylhexyl, 1,1-, 1,2-, 1,3-, 1,4-, 2,2-, 2,3-, 2,4-, 3,3-, 3,4- oder 4,4-Dimethylpentyl, 2- oder 3-Ethylpentyl, 1-, 2-, 3- oder 4-Octyl, 2-, 3-, 4-, 5- oder 6-Methylhexyl, 1,1-, 1,2-, 1,3-, 1,4-, 1,5-, 2,2-, 2,3-, 2,4-, 2,5-, 3,3-, 3,4-, 3,5-, 4,4-, 4,5- oder 5,5-Dimethylhexyl, 2-, 3- oder 4-Ethylhexyl, Nonyl oder Decyl, besonders bevorzugt für einen C₈-Alkylrest und speziell für 2-Ethylhexyl. Bevorzugt stehen dabei R¹ und R² für den gleichen Rest.

n steht für eine Zahl von 1 bis 3, vorzugsweise für eine Zahl von 1 bis 2 und insbesondere für 2.

Bei Verwendungsvarianten 1 sind Mannich-Addukte der Formel I beispielsweise durch die Umsetzung eines mit einem Polyolefinrest R⁸ substituierten Phenols der Formel V 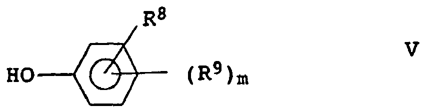 worin R⁸, R⁹ und m wie bei den jeweiligen Verwendungsvarianten 1 und 2 definiert sind,
in einer Mannich(analogen)-Reaktion mit einem Aldehyl CHR¹⁰O und einem Amin NHR¹R² erhältlich, wobei R¹⁰, R¹ und R² wie vorstehend definiert sind. Bezüglich der bevorzugten Edukte V, Aldehyd und Amin gelten die bei den jeweiligen Verwendungsvarianten gemachten Ausführungen zu R⁸, R⁹, R¹⁰, R¹, R² und n sowie die nachstehenden Ausführungen zu R⁸.

Geeignete Aldehyde CHR¹⁰O sind Formaldehyd, Acetaldehyd, Propionaldehyd und Butyraldehyd bzw. Verbindungen, aus denen diese Aldehyde zugänglich sind. Diese werden nachfolgend allgemein als Aldehydquellen bezeichnet. Vorzugsweise verwendet man Formaldehyd. Geeignete Formaldehydquellen sind Formaldehydgas, Formalinlösungen, Formaldehydoligomere, wie Trioxan oder Tetraoxan, und Polymere des Formaldehyds, wie Paraformaldehyd. Bevorzugt verwendet man Paraformaldehyd oder Formalinlösung.

Das Phenol V kann auf zwei verschiedene Arten zu den Mannich-Addukten I umgesetzt werden. Zum einen kann es gleichzeitig mit dem Aldehyd und dem Amin NHR¹R² umgesetzt werden. Vorzugsweise weist das Amin bei dieser Umsetzungsvariante (Variante A) keine primäre Aminofunktion auf, da sonst größere Mengen unerwünschter Oligomerisierungsprodukte auftreten können. Primäre Aminofunktionen im Sinne dieser Erfindung sind solche der Formel NH₂R, wobei R für einen von Wasserstoff verschiedenen Substituenten steht. Zum anderen kann das Phenol V mit einem zuvor hergestellten Addukt aus einem Aldehyd und einem Amin der Formel NHR¹R² umgesetzt werden (Variante B). In diesem Fall kann das Amin auch eine primäre Aminofunktion aufweisen, das heißt einer der Reste R¹ oder R² kann für H stehen.

Für geeignete Amine NHR¹R² gelten die vorstehend gemachten Ausführungen zu R¹ und R². Als Beispiele für Amine, in denen R¹ und/oder R² für C₁-C₂₀-Alkyl steht, seien genannt Propylamin, Isopropylamin, Butylamin, Pentylamin, Hexylamin, Heptylamin, Octylamin, Diethylamin, Dipropylamin, Diisopropylamin, Dibutylamin, Dipentylamin, Dihexylamin, Diheptylamin, Dioctylamin, Di(2-Ethylhexyl)amin, Dinonylamin und Didecylamin. Geeignete Amine, in denen R¹ und/oder R² für einen Rest der Formel II stehen, sind beispielsweise Diethylentriamin, Triethylentetramin, Tetraethylenpentamin, Pentaethylenhexamin, Propylendiamin, Dipropylentriamin, Tripropylentetramin, Tetrapropylenpentamin, Butylendiamin, Dibutylentriamin, Tributylentetramin, Tetrabutylenpentamin, N,N-Dime-thylmethylendiamin, N,N-Diethylmethylendiamin, N,N-Dipropylmethy-lendiamin, N,N-Dimethylethylen-1,2-diamin, N,N-Diethylethy-len-1,2-diamin, N,N-Dipropylethylen-1,2-diamin, N,N-Dimethylpropylen-1,3-diamin, N,N-Diethylpropylen-1,3-diamin, N,N-Dipropyl-propylen-1,3-diamin, N,N-Dimethylbutylen-1,4-diamin, N,N-Diethyl-butylen-1,4-diamin, N,N-Dipropylbutylen-1,4-diamin, N,N-Dimethyl-pentylen-1,3-diamin, N,N-Diethylpentylen-1,5-diamin, N,N-Dipro-pylpentylen-1,5-diamin, N,N-Dimethylhexylen-1,6-diamin, N,N-Di-ethylhexylen-1,6-diamin, N,N-Dipropylhexylen-1,6-diamin, Bis[(N,N-Dimethylamino)methyl]amin, Bis[(N,N-Diethylamino)methyl]amin, Bis[(N,N-Dipropylamino)methyl]amin, Bis[2-(N,N-Dimethyl-amino)ethyl]amin, Bis[2-(N,N-Dipropylamino)ethyl]amin, Bis[3-(N,N-Dimethylamino)propyl]amin, Bis[3-(N,N-Diethylamino)propyl]amin, Bis[3-(N,N-Dipropylamino)propyl]amin, Bis[4-(N,N-Di-methylamino)butyl]amin, Bis[4-(N,N-Diethylamino)butyl]amin, Bis[4-(N,N-Dipropylamino)butyl]amin, Bis[5-(N,N-Dimethylamino)pentyl]amin, Bis[5-(N,N-Diethylamino)pentyl]amin, Bis[5-(N,N-Dipropyl-amino)pentyl]amin, Bis[6-(N,N-Dimethylamino)hexyl]amin, Bis[6-(N,N-Diethylamino)hexyl]amin, Bis[6-(N,N-Dipropylamino)hexyl]amin und dergleichen. Zur Herstellung der in Verwendungvariante 1 eingesetzten Mannich-Addukte I sind außerdem Methylamin, Ethylamin, Dimethylamin und Ethylendiamin geeignet.

Besonders bevorzugte Amine sind Bis[3-(N,N-Dimethylamino)propyl]amin und Di-(2-ethylhexyl)amin.

Die für die Umsetzung nach Variante A geeigneten Reaktionstemperaturen hängen von einer Reihe von Faktoren ab. Bei der Mannich-Reaktion in Variante A entsteht Reaktionswasser. In der Regel wird dieses aus dem Reaktionsgemisch entfernt. Das Entfernen des Reaktionswassers kann während der Reaktion, am Ende der Reaktionszeit oder nach beendeter Reaktion entfernt werden, beispielsweise destillativ. Vorteilhaft lässt sich das Reaktionswasser durch Erhitzen des Reaktionsgemisches in Gegenwart von Schleppmitteln entfernen. Geeignet als Schleppmittel sind beispielsweise organische Lösungsmittel, die mit Wasser ein Azeotrop bilden und/ oder einen Siedepunkt oberhalb des Siedepunktes von Wasser aufweisen.

Besonders geeignete Schleppmittel sind Benzol und Alkylaromaten, insbesondere Toluol, Xylole und Mischungen von Alkylaromaten mit anderen (hochsiedenden) Kohlenwasserstoffen. Besonders einfach ist die Verwendung von bestimmten Destillationsfraktionen des Erdöls, die im allgemeinen nach Flammpunkt oder Siedebereich sowie Aromatengehalt verkauft werden. Beispiele dafür sind die Solvesso- und die Risella-Marken. In der Regel wird das Entfernen des Reaktionswasser bei einer Temperatur durchgeführt, die in etwa dem Siedepunkt des Schleppmittels oder des Azeotrops aus Wasser und Schleppmittel entspricht.

Geeignete Temperaturen für das Entfernen des Reaktionswassers liegen daher bei Normaldruck im Bereich von 75 bis 200 °C, bevorzugt 80 bis 180 °C, und besonders bevorzugt im Bereich von 80 bis 150 °C. Wird das Reaktionswasser bei vermindertem Druck entfernt, sind die Temperaturen entsprechend den erniedrigten Siedetemperaturen zu verringern.

Die Reaktionstemperaturen für die Mannich-Reaktion in Variante A liegen vorzugsweise im Bereich von 10 ° bis 200 °C, insbesondere im Bereich von 20 bis 180 °C, z. B. etwa 35 °C, etwa 90 °C, etwa 120 °C, 140 °C oder etwa 160 °C.

Die Umsetzung in Variante A kann beispielsweise so durchgeführt werden, dass Phenol, Amin und Aldehydquelle zusammengegeben und das Reaktionsgemisch auf die gewünschte Reaktionstemperatur, vorzugsweise in den vorstehend genannten Temperaturbereichen, gebracht wird. Die Umsetzung kann auch so durchgeführt werden, dass das Phenol und gegebenenfalls ein Lösungsmittel zuerst mit der Aldehydquelle versetzt und gegebenenfalls auf die Reaktionstemperatur erwärmt wird und anschließend wenigstens ein sekundäres Amin zugegeben wird. Die Zugabe des Amins kann in einer Portion oder über einen Zeitraum von beispielsweise 5 bis 300 Minuten durch mehrmaliges portionsweises Zugeben oder kontinuierliches Zugeben erfolgen. Die Umsetzung kann auch so durchgeführt werden, dass zuerst Phenol V und gegebenenfalls Lösungsmittel und Amin zusammengegeben, gegebenenfalls auf Reaktionstemperatur erwärmt und anschließend mit der Aldehydquelle versetzt werden, wobei die Zugabe der Aldehydquelle wie vorstehend für das Amin beschrieben erfolgen kann.

In einer bevorzugten Ausführungsform wird Variante A, d. h. die Mannich-Reaktion und das Entfernen des Reaktionswassers etwa bei Atmosphärendruck und einer Temperatur von etwa 80 °C, etwa 110 °C oder etwa 130 °C mit aromatischen Lösungsmitteln, vorzugsweise Toluol, Xylolen oder Gemischen davon, als Schleppmittel durchgeführt. Variante A wird vorzugsweise so durchgeführt, dass die Reaktanden in einem Temperaturbereich zwischen 10 und 50 °C zusammengegeben werden, gegebenenfalls in diesem Temperaturbereich vermischt werden, und anschließend auf die zur destillativen Entfernung des Reaktionswassers erforderliche Temperatur gebracht werden.

Die Gesamtreaktionszeit für die Umsetzung der Phenole V zu den Mannich-Addukten I kann vom Fachmann in Abhängigkeit der Reaktionsparameter, wie Temperatur und Reaktandenmengen, gewählt werden und beträgt im Allgemeinen zwischen 10 Minuten und 24 Stunden.

Zur Herstellung der in Verwendungsvariante 2 eingesetzten Mannich-Addukte I setzt man bei den Varianten A oder B der Mannich-Reaktion die Reaktanden in Verhältnissen ein, die bei Verwendungsvariante 2 von dem Molekulargewicht des verwendeten Amins abhängen.

Beträgt das Molekulargewicht des Amins 120 g/mol oder weniger, so muss das Reaktandenverhältnis so gewählt werden, dass ein bisaminoalkyliertes Phenol I entstehen kann, um die in Verwendungsvariante 2 erfindungswesentliche Maßgabe bezüglich des Molekulargewichts von n Resten NHR¹R² zu erfüllen. Dementsprechend beträgt das Molverhältnis von Phenol V zu Amin zu Aldehyd in der Regel 1:2-3:2-3, vorzugsweise 1:2,0-2,5:2,0-2,5, besonders bevorzugt etwa 1:2:2.

Beträgt das Molekulargewicht des verwendeten Amins wenigstens 121 g/mol, so kann das Reaktandenverhältnis je nach gewünschtem Aminomethylierungsgrad so gewählt werden, dass mono- oder bisaminoalkylierte Phenole I entstehen können, weil die oben genannte Maßgabe bezüglich des Molekulargewichts in Verwendungsvariante 2 in diesem Fall auch bei einem einfach aminoalkylierten Phenol erfüllt ist. Dementsprechend beträgt das Verhältnis von Phenol V zu Amin zu Aldehyd geeigneterweise 1:0,8-3,0:0,8-3,0, vorzugsweise 1:1,0-2,5:1,0-2,5 und besonders bevorzugt etwa 1:1,0-2,0:1,0-2,0.

In einer besonders bevorzugten Ausführungsform beträgt das Verhältnis von Phenol V zu Amin zu Aldehyd unabhängig von der Art des gewählten Amins etwa 1:2:2.

Zur Herstellung der in Verwendungsvariante 1 eingesetzten Mannich-Addukte sind diese Reaktandenverhältnisse nicht zwingend, jedoch bevorzugt.

Bei der Variante B wird zunächst ein Addukt aus Aldehyd oder einem Aldehydäquivalent, wie Dichlormethan oder Dibrommethan oder Dimethoxymethan, Amin, und gegebenenfalls Lösungsmittel durch Zusammengeben der Komponenten und gegebenenfalls unter Erwärmen auf vorstehend für Variante A beschriebene Temperaturbereiche und innerhalb der vorstehend für Variante A beschriebenen Reaktionszeiten hergestellt. Während oder nach der Umsetzung von Amin und Aldehydquelle kann gebildetes Reaktionswasser gewünschtenfalls, z. B. wie vorstehend beschrieben, entfernt werden. Das so erhaltene Reaktionsprodukt aus Amin und Aldehyd kann gewünschtenfalls gereinigt und/oder isoliert werden. Insbesondere die durch Umsetzung von einem Äquivalent Aldehyd oder einem Äquivalent eines Aldehydäquivalents mit einem oder zwei Äquivalenten eines sekundären Amins oder einem Äquivalent eines primären Amins nach Entfernung des gebildeten Reaktionswassers, Alkohols oder Halogenids erhältlichen Addukte (sekundäres Amin: Alkyleniminiumion oder Aminal; primäres Amin: Imin oder Hexahydrotriazin) lassen sich gewünschtenfalls isolieren, reinigen und/oder für eine spätere Umsetzung mit dem Phenol V aufbewahren. Anschließend werden das Reaktionsprodukt aus Amin und Aldehyd bzw. Aldehydäquivalent und das Phenol V miteinander versetzt, wobei das Zusammengeben in einer Portion, in mehreren Portionen oder kontinuierlich in den vorstehend genannten Zeiträumen erfolgen kann. Reaktionstemperaturen und Reaktionszeiten liegen üblicherweise in den wie vorstehend für die Reaktionsführungen nach Variante A beschriebenen Bereichen. Wenn man das Reaktionsprodukt aus Aldehyd bzw. Aldehydäquivalent und Amin isoliert, wird die Umsetzung mit dem Phenol V vorzugsweise so durchgeführt, dass das Phenol und gegebenenfalls Lösungsmittel vorgelegt wird, die Vorlage gegebenenfalls auf eine Temperatur im Bereich von 50 bis 180 °C erwärmt und anschließend das Addukt aus Amin und Aldehyd bzw. Aldehydäquivalent zugegeben wird. Das Addukt aus Amin und Aldehyd bzw. Aldehydäquivalent wird dann zugegeben und das Reaktionsgemisch auf eine geeignete Reaktionstemperatur erwärmt. Gewünschtenfalls kann das bei der Umsetzung von Aminalen mit dem Phenol entstehende Amin in Abhängigkeit von der Flüchtigkeit des Amins abdestilliert und/oder im Vakuum entfernt werden.

Wenn man die unter Variante B beschriebene Reaktion ohne Isolierung des Adduktes aus Aldehyd bzw. Aldehydäquivalent und Amin(en) durchführt, werden vorzugsweise erst die Aldehydquelle oder das Aldehydäquivalent und Amin zusammengegeben, gegebenenfalls erwärmt und durchmischt und das Addukt mit dem Phenol V versetzt. Vorzugsweise wird dazu das Phenol V zu dem Addukt in der Vorlage zugegeben und das Gemisch auf eine geeignete Reaktionstemperatur erhitzt. Geeignete Reaktionstemperaturen hierfür liegen beispielsweise im Bereich von 25 bis 120 °C und insbesondere im Bereich von 50 bis 100 °C.

Bevorzugt setzt man beim Einsatz primärer Amine gemäß Variante B als Addukt ein gegebenenfalls zuvor isoliertes Imin oder N-substituiertes Hexahydrotriazin ein, dessen Substituenten sich von den vorstehend genannten Resten R¹ oder R² ableiten.

Bevorzugt setzt man bei der Verwendung sekundärer Amine gemäß Variante B als Addukt ein gegebenenfalls zuvor isoliertes Halbaminal, Alkyleniminiumion oder Aminal ein, wobei sich die Aminofunktionen des Halbaminals, Alkyleniminiumions oder Aminals vorzugsweise von den vorstehend genannten sekundären Aminen HNR¹R² ableiten.

Vorzugsweise setzt man als Addukt gemäß Variante B ein Addukt aus wenigstens einem Amin und einer Aldehydquelle ein, das durch an sich bekannte Verfahren erhältlich ist. Dazu setzt man die Edukte geeigneterweise bei einer Temperatur oberhalb von 0 °C, vorzugsweise oberhalb von +20 °C, z. B. in einem Temperaturbereich von 20 bis 30 °C oder etwa 20 bis 50 °C, miteinander um. Gegebenenfalls kann anschließend gebildetes Reaktionswasser unter den wie vorstehend für Variante A beschriebenen Bedingungen, z. B. destillativ, entfernt werden.

Geeignete Lösungsmittel für die Umsetzung gemäß Variante B sind die für die Umsetzung gemäß Variante A beschriebenen Lösungs- und Schleppmittel sowie Kohlenwasserstoffe und Kohlenwasserstoffgemische mit Siedepunkten bzw. -bereichen zwischen +35 und +110 °C, Alkohole, C₂-C₆-Dialkylether, cyclische Mono- und Diether mit 3 bis 6 Kohlenstoffatomen, insbesondere Ethanol, Isopropanol, Butanole, Tetrahydrofuran, Tetrahydropyran und Dioxan.

Vorzugsweise setzt man als Addukt gemäß Variante B ein Aminal des Aldehyds mit einem sekundären Amin, das wie vorstehend definiert ist, ein.

Geeignete Aminale für die vorstehend beschriebene Umsetzung sind beispielsweise N,N,N',N'-Tetramethylmethylendiamin und N,N,N',N'-Tetraethylmethylendiamin.

In einer weiteren Ausführungsform der Variante B können die Phenole V in einer analogen Reaktion mit Halbaminalen zu Mannichaddukten umgesetzt werden. Solche Halbaminale sind aus Aldehydquellen oder Aldehydäquivalenten und sekundären Aminen, die keine primäre Aminofunktion aufweisen, zugänglich und können in einer Eintopf-Reaktion in Gegenwart der Phenole V (Variante A) erzeugt oder separat (Variante B) hergestellt werden.

Mittels der vorstehend unter Variante A und Variante B beschriebenen Vorgehensweisen kann das Phenol V durch Wahl der Stöchiometrie zu mono- und bisaminoalkylierten Mannichaddukten umgesetzt werden.

In einer bevorzugten Ausführungsform wird zuerst die Aldehydquelle oder das Aldehydäquivalent, vorzugsweise Formalinlösung oder Paraformaldehyd, gegebenenfalls in Lösungsmittel, vorgelegt, und eine etwa äquimolare Menge eines sekundären Amins, vorzugsweise eines nur eine sekundäre und keine primäre Aminogruppe aufweisenden Amins, bei einer Temperatur im Bereich von +15 bis +50 °C, bevorzugt +20 bis +35 °C, zugegeben. Anschließend wird das Gemisch bei einer Temperatur im vorstehend angegebenen Bereich durchmischt und anschließend mit dem Phenol V und gegebenenfalls weiterem Lösungsmittel vereinigt. Anschließend wird die so erhaltene Mischung auf eine Temperatur im Bereich von 40 bis 100 °C, vorzugsweise 50 bis 90 °C erhitzt, beispielsweise unter Rückfluss. Anschließend kann das Reaktionsgemisch gewünschtenfalls gereinigt werden, beispielsweise durch Filtrieren und/oder Entfernen der flüchtigen Bestandteile, beispielsweise im Vakuum oder durch Destillation.

In einer weiteren bevorzugten Ausführungsform wird das Phenol V gegebenenfalls in einem Lösungsmittel vorgelegt und die Mischung auf eine Temperatur im Bereich von 40 bis 100 °C, vorzugsweise 50 bis 90 °C erhitzt, beispielsweise unter Rückfluss des Lösungsmittels. Anschließend gibt man bei dieser Temperatur langsam entweder eine etwa äquimolare Menge oder 1,7 bis 2,5 Äquivalente, z. B. etwa 2 Äquivalente, eines Aminals, gegebenenfalls in einem Lösungsmittel, zu und lässt das Reaktionsgemisch weitere 30 Minuten bis 4 Stunden, insbesondere 1 bis 3 Stunden bei einer Temperatur in den vorgenannten Bereichen reagieren. Gegebenenfalls kann das Reaktionsgemisch anschließend gereinigt werden, beispielsweise durch Filtrieren und/oder Entfernen der flüchtigen Bestandteile im Vakuum oder durch Destillation.

Geeignete Lösungsmittel für die beiden vorstehend beschriebenen Ausführungsformen der Variante B sind Kohlenwasserstoffe, Kohlenwasserstoffgemische, Ether oder Alkohole mit einem Siedepunkt bzw. Siedebereich im Bereich von 40 bis 100 °C, insbesondere 50 bis 90 °C. Insbesondere geeignet sind Tetrahydrofuran und Dioxan.

In einer weiteren bevorzugten Ausführungsform wird zuerst das Phenol V und gegebenenfalls Lösungsmittel vorgelegt. Anschließend gibt man langsam, beispielsweise durch Zutropfen, eine etwa äquimolare Menge oder vorzugsweise 1,7 bis 2,5 Äquivalente, z.B. etwa 2 Äquivalente, einer Aldehydquelle und eines vorzugsweise sekundären Amins, besonders bevorzugt eines Amins ohne primäre und ohne weitere sekundäre Aminofunktionen, und gegebenenfalls Lösungsmittel zu. Anschließend vermischt man die Komponenten und erhitzt die Mischung anschließend auf eine Temperatur im Bereich von 40 bis 100 °C, vorzugsweise 50 bis 90 °C. Das Reaktionsgemisch kann anschließend gereinigt werden, beispielsweise durch Filtrieren und/oder Entfernen der flüchtigen Bestandteile im Vakuum oder durch Destillation. Geeignet als Lösungsmittel sind insbesondere die bei den vorstehend beschriebenen bevorzugten Ausführungsformen genannten Lösungsmittel. Bevorzugt ist Isopropanol.

In einer weiteren bevorzugten Ausführungsform werden Phenol V und eine etwa äquimolare Menge oder vorzugsweise 1,7 bis 2,5 Äquivalente, z.B. etwa 2 Äquivalente, eines vorzugsweise sekundären Amins, besonders bevorzugt eines Amins ohne primäre und ohne weitere sekundäre Aminofunktionen, in Lösungsmittel vorgelegt. Anschließend gibt man langsam eine etwa äquimolare Menge einer Aldehydquelle zu. Vorzugsweise erwärmt man das Reaktionsgemisch während der Zugabe der Aldehydquelle auf eine Temperatur im Bereich von 30 bis 70, bevorzugt 40 bis 60 °C. Anschließend wird das Reaktionsgemisch auf eine Temperatur im Bereich von 80 bis 180 °C, bevorzugt 90 bis 140 °C und besonders bevorzugt bis zum Rückfluss des Lösungsmittels erhitzt. Dabei wird vorzugsweise das gebildete Reaktionswasser destillativ entfernt. Als Lösungsmittel für diese Ausführungsform sind insbesondere aromatische Lösungsmittel oder deren Gemische mit hochsiedenden weiteren Kohlenwasserstoffen geeignet. Besonders geeignet sind Xylole und Toluol und deren Gemische.

In der Regel erhält man nach den oben beschriebenen Verfahren ein Mannichaddukt-Gemisch, dass wenigstens 40 Mol.-%, häufig wenigstens 50 Mol.-% und besonders bevorzugt wenigstens 60 Mol.-% Verbindungen der Formel I enthält. Die Verbindungen I können aus dem Reaktionsgemisch isoliert und der erfindungsgemäßen Verwendung zugeführt werden. Es ist jedoch genauso möglich, die Verbindungen I in Form des Gesamtreaktionsgemisches, das aus dem zuvor beschrieben Verfahren gewonnen wird, erfindungsgemäß zu verwenden.

In Verwendungsvariante 1 steht der Rest R⁸ insbesondere für einen Rest, der sich von sogenannten "reaktiven" Poylisobutenen ableitet, die sich von den "niedrigreaktiven" Polyisobutenen durch den Gehalt an terminal angeordneten Doppelbindungen unterscheiden. Reaktive Polyisobutene unterscheiden sich von niedrigreaktiven dadurch, dass sie wenigstens 50 Mol-%, bezogen auf die Gesamtanzahl an Polyisobuten-Makromolekülen, terminal angeordnete Doppelbindungen besitzen. In beiden Verwendungsvarianten 1 und 2 besitzen die reaktiven Polyisobutene vorzugsweise wenigstens 60 Mol-% und besonders bevorzugt wenigstens 80 Mol-%, bezogen auf die Gesamtanzahl an Polyisobuten-Makromolekülen, terminal angeordnete Doppelbindungen. Bei den terminal angeordneten Doppelbindungen kann es sich sowohl um Vinyldoppelbindungen [-CH=C(CH₃)₂] als auch um Vinyliden-Doppelbindungen [-CH₂-C(=CH₂)-CH₃] handeln. Mit reaktiven Polyisobutenen substituierte Phenole sowie Verfahren zu ihrer Herstellung sind in der DE-OS-19948111 beschrieben, auf die hier in vollem Umfang Bezug genommen wird. In beiden Verwendungsvarianten 1 und 2 sind insbesondere Polyisobutene bevorzugt, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Vorzugsweise weisen die reaktiven Polyisobutene darüber hinaus eine Polydispersität von kleiner 3,0, insbesondere kleiner 1,9 und besonders bevorzugt von kleiner 1,7 oder kleiner 1,5, auf. Unter Polydispersität versteht man den Quotienten aus gewichtsmittlerem Molekulargewicht M_{W} geteilt durch das zahlenmittlere Molekulargewicht M_{N}.

Vorzugsweise weist R⁸ ein zahlenmittleres Molekulargewicht im Bereich von 300 bis 3 000, besonders bevorzugt von 400 bis 2 500, z. B. ein zahlenmittleres Molekulargewicht von etwa 550, etwa 800, etwa 1 000 oder etwa 2 300, und ganz besonders bevorzugt 500 bis 1 500, z. B. ein zahlenmittleres Molekulargewicht von etwa 550, etwa 800 oder etwa 1 000, auf.

In Verwendungsvariante 1 sind besonders geeignete reaktive Polyisobutene z. B. die Glissopal-Marken der BASF AG, insbesondere Glissopal 1000 (M_{N} = 1 000), Glissopal 550 (M_{N} = 550) und Glissopal 2300 (M_{N} = 2 300) und deren Mischungen. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden.

Vorzugsweise steht R⁸ in p-Position zur OH-Gruppe.

Das Polyisobuten-substituierte Phenol V ist beispielsweise durch die Umsetzung (Alkylierung) eines mit m Resten R⁹ substituierten Phenols mit einem derartigen Polyisobuten erhältlich. Geeignet für die Umsetzung mit reaktiven Polyisobutenen sind unsubstituiertes Phenol und ein- oder zweifach substituierte Phenole. Als substituierte Phenole sind insbesondere einfach ortho-substituierte Phenole geeignet. Geeignete alkylsubstituierte Phenole sind 2-Methylphenol und 2-Ethylphenol. Besonders bevorzugt für die Alkylierung mit Polyisobutenen sind unsubstituiertes Phenol und 2-Methylphenol.

Bei der Alkylierung wird das Phenol üblicherweise äquimolar oder im Überschuss eingesetzt. Geeignet ist ein etwa 1,1 bis 10-facher Überschuss, beispielsweise ein etwa 1,1-facher, ein etwa 2-facher, ein etwa 4-facher oder ein etwa 6-facher Überschuss des Phenols. Das erhaltene Rohprodukt wird gegebenenfalls nach Aufreinigung beispielsweise wie vorstehend beschrieben in einer Mannich(analogen)-Reaktion weiter umgesetzt.

Nach erfolgter Umsetzung kann das Reaktionsgemisch beispielsweise durch Extraktion mit Lösungsmitteln, vorzugsweise polaren Lösungsmitteln, wie Wasser oder C₁-C₆-Alkanolen oder Gemische davon, durch Strippen, d. h. durch Durchleiten von Wasserdampf oder gegebenenfalls Erhitzen von Gasen, z. B. Stickstoff, destillativ oder durch basische Ionenaustauscher, wie in der deutschen Patentanmeldung P 10060902.3 beschrieben, von überschüssigem Phenol und/oder Katalysator befreit werden.

Die Alkylierung des Phenols wird unterhalb von etwa 60 °C, vorzugsweise unterhalb von 40 °C und insbesondere unterhalb von 30 °C, in Gegenwart eines Alkylierungskatalysators durchgeführt. In der Regel wird die Alkylierung bei Temperaturen oberhalb von -40 °C, vorzugsweise oberhalb von -30 °C und insbesondere oberhalb von -20 °C, durchgeführt. Besonders geeignet für die Alkylierung sind Temperaturen im Bereich von -10 bis +45 °C, insbesondere im Bereich von 0 bis +40 °C und besonders bevorzugt von 10 bis +35 °C.

Geeignete Alkylierungskatalysatoren sind dem Fachmann bekannt. Geeignet sind beispielsweise Protonensäuren, wie Schwefelsäure, Phosphorsäure und organische Sulfonsäuren, z. B. Trifluormethansulfonsäure, Lewissäuren, wie Aluminiumtrihalogenide, z. B. Aluminiumtrichlorid oder Aluminiumtribromid, Bortrihalogenide, z. B. Bortrifluorid und Bortrichlorid, Zinnhalogenide, z. B. Zinntetrachlorid, Titanhalogenide, z. B. Titantetrabromid und Titantetrachlorid; und Eisenhalogenide, z. B. Eisentrichlorid und Eisentribromid. Die Lewissäuren werden gegebenenfalls gemeinsam mit Lewisbasen, wie Alkohole, insbesondere C₁-C₆-Alkanole, Phenole oder aliphatische oder aromatische Ether, beispielsweise Diethylether, Diisopropylether oder Anisol, eingesetzt. Bevorzugt sind Addukte von Bortrihalogeniden, insbesondere Bortrifluorid, in Kombination mit den zuvor genannten Lewisbasen. Besonders bevorzugt sind Bortrifluoridetherat und Bortrifluoridphenolat. Aus praktischen Gründen ist besonders letzteres geeignet , da es beim Einleiten von Bortrifluorid in das Phenol-haltige Reaktionsgemisch entsteht.

Die Alkylierung wird vorzugsweise in einem flüssigen Medium durchgeführt. Dazu wird das Phenol vorzugsweise in einem der Reaktanden und/oder einem Lösungsmittel, gegebenenfalls unter Erwärmen, gelöst. In einer bevorzugten Ausführungsform wird daher die Alkylierung so durchgeführt, dass das Phenol oder das substituierte Phenol zuerst unter Zufuhr von Wärme geschmolzen und anschließend mit einem geeigneten Lösungsmittel und/oder dem Alkylierungskatalysator, insbesondere dem Bortrihalogenid-Addukt, versetzt wird. Danach wird das flüssige Gemisch auf eine geeignete Reaktionstemperatur gebracht. In einer weiteren bevorzugten Ausführungsform wird das Phenol erst aufgeschmolzen und mit dem Polyisobuten und gegebenenfalls einem geeigneten Lösungsmittel versetzt. Das so erhaltene flüssige Gemisch kann auf eine geeignete Reaktionstemperatur gebracht und anschließend mit dem Alkylierungskatalysator versetzt werden.

Geeignete Lösungsmittel für die Durchführung dieser Reaktion sind beispielsweise Kohlenwasserstoffe, vorzugsweise Pentan, Hexan und Heptan, insbesondere Hexan, Kohlenwasserstoffgemische, z. B. Petroleumbenzine mit Siedebereichen zwischen 35 und 100 °C, Kerosinfraktionen mit Siedebereichen von 100 bis 200 °C, aromatische Kohlenwasserstoffe, wie Toluol, Ethylbenzol, Propyl- und Isopropylbenzol, n-Butylbenzol, sec-Butylbenzol, Isobutylbenzol, tert-Butylbenzol oder die Xylole sowie deren Gemische, beispielsweise in Form komerzieller Alkylaromatenfraktionen, wie Solvesso 100, 150 oder 200, und halogenierte Kohlenwasserstoffe, wie Dichlormethan oder Trichlormethan, sowie Mischungen der vorgenannten Lösungsmittel.

Die Reaktion wird vorzugsweise durch die Zugabe des Katalysators oder eines der beiden Reaktanden, Phenol oder Polyisobuten, eingeleitet. Die Zugabe der die Reaktion einleitenden Komponente erfolgt vorzugsweise über einen Zeitraum von 2 bis 300 Minuten, bevorzugt 5 bis 200 und insbesondere 10 bis 180 Minuten, wobei die Temperatur des Reaktionsgemisches vorteilhaft die oben angegebenen Temperaturbereiche nicht überschreitet. Nach beendeter Zugabe lässt man das Reaktionsgemisch vorzugsweise 5 Minuten bis 24 Stunden, insbesondere 10 Minuten bis 6 Stunden, bei einer Temperatur unterhalb von 30 °C nachreagieren. Dabei werden die Reaktionsbedingungen vorzugsweise so gewählt, dass wenigstens 85 %, insbesondere wenigstens 90 % und besonders bevorzugt wenigstens 95 % des Polyisobutenphenols entstehen. Die so erhaltenen Polyisobuten-substituierten Phenole bestehen vorzugsweise zu mehr als 85 %, insbesondere mehr als 90 % und besonders bevorzugt zu mehr als 95 % aus Isomeren, deren Polyisobutenrest para-ständig zur Hydroxygruppe des Phenols ist.

Die obigen Ausführungen zur Alkylierung von Phenolen V mit Polyisobutenen gelten analog für die Alkylierung mit anderen Polyolefinen.

Vorzugsweise weisen die Phenole V bzw. die Mannichaddukte I eine Polydispersität im Bereich von 1,05 bis 3,5, insbesondere 1,1 bis 2,5 und besonders bevorzugt 1,1 bis 1,9, auf.

Die Einstellung der gewünschten Polydispersität kann durch gezielte Auswahl der Einsatzstoffe, Wahl der Stöchiometrie, Wahl der Temperatur und Reaktionszeit sowie gegebenenfalls der Aufarbeitung, insbesondere durch übliche Reinigungstechniken, wie Extrahieren und Destillieren, erreicht werden.

Geeignete Maßnahmen, die einzeln oder in Kombination die Bildung von Addukten I mit erhöhter Wirksamkeit und/oder geringer Polydispersität begünstigen, sind beispielsweise ausgewählt unter
- Verwendung von Polyolefinen niedriger Polydispersität zur Herstellung der Phenole V,
- Verwendung von Polyolefinen mit möglichst hohen Anteilen an terminalen Doppelbindungen,
- Einsatz der Polyolefine im Unterschuss bei der Alkylierung der Phenole, gegebenenfalls gefolgt von einer anschließenden Abtrennung des unumgesetzten Phenols,
- Durchführen der Alkylierung bei einer möglichst geringen Temperatur, die dennoch einen vollständigen Umsatz gewährleistet, z. B. oberhalb von etwa +5 °C und unterhalb von etwa +40 °C,
- Einhaltung einer geeigneten Stöchiometrie; z. B. ein Verhältnis von Aldehyd:Amin:Phenol V von etwa 1:1:1 (zur Herstellung von monoaminoalkylierten Mannichaddukten I) oder etwa 2:2:1 (zur Herstellung von bisaminoalkylierten Mannichaddukten I),
- Durchführung der Mannich(analogen)-Reaktion mit einem Addukt aus Amin und Aldehyd bzw. Aldehydäquivalent gemäß Variante B, insbesondere gemäß der vorstehend beschriebenen bevorzugten Ausführungsformen,
- Extraktion des Phenols V und/oder der Mannich-Base mit polaren organischen Lösungsmitteln, beispielsweise Alkoholen, wie Methanol, Ethanol, Propanol, Isopropanol, n-Butanol, sec-Butanol, Isobutanol und tert-Butanol; Ketone, wie Aceton, Methylethylketon, Diethylketon und Cyclohexanon; Ester, wie Methylacetat, Ethylacetat, Propylacetat, Isopropylacetat, Methylpropionat und Ethylpropionat; und Nitrile, wie Acetonitril, Propionitril und Butyronitril.

Bevorzugt verwendet man Komponente B als Dispergator/Detergens, weil die Mannich-Addukte leichter dosierbar sind als die Amine der Komponente A und weil sie im Gegensatz zu freien Aminen keine Geruchsbelästigung darstellen. Bevorzugt ist jedoch auch die Verwendung eines Gemischs der Komponenten A und B, weil mit einem solchen Gemisch unterschiedlichen Anforderungen bei unterschiedlichen direkteinspritzenden Motorsystemen entsprochen werden kann. Das Gewichtsverhältnis von Komponente A zu Komponente B beträgt dabei vorzugsweise 20:1 bis 1:20, besonders bevorzugt 10:1 bis 1:10 und insbesondere 5:1 bis 1:5.

In einer bevorzugten Ausführungsform der Verwendungsvariante 1 verwendet man, gegebenenfalls im Gemisch mit Komponente A, ein Mannich-Addukt der Formel I.1 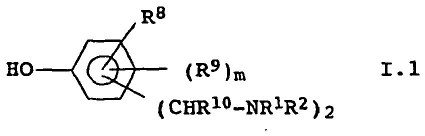 worin
- R⁸: bei Verwendungsvariante 1 für einen Polyisobuten-Rest mit einem zahlenmittleren Molekulargewicht von vorzugsweise 300 bis 3000 bzw. bei Verwendungsvariante 2 für einen Poly(iso)buten-Rest mit einem zahlenmittleren Molekulargewicht von vorzugsweise 300 bis 3000 steht,
- R⁹: für eine C₁-C₆-Alkylgruppe steht,
- R¹⁰: für H oder C₁-C₆-Alkyl steht,
- R¹ und R²: unabhängig voneinander für C₆-C₃₀-Alkyl, 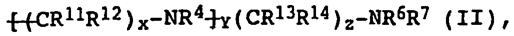 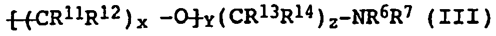 oder 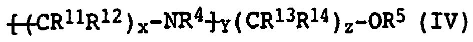 stehen
wobei R⁴, R⁵, R¹¹, R¹², R¹³ und R¹⁴ unabhängig voneinander für H oder C₁-C₆-Alkyl stehen,
R⁶ und R⁷ unabhängig voneinander für H, C₁-C₆-Alkyl oder C₁-C₆-Hydroxyalkyl stehen
x und z unabhängig voneinander für eine Zahl von 1 bis 20 stehen,
y für eine Zahl von 0 bis 10 steht und
- m: für 0 oder 1 steht.
- R⁹: steht vorzugsweise für Methyl oder Ethyl.
- R¹⁰, R¹¹, R¹², R¹³ und R¹⁴: stehen vorzugsweise für H.

In einer besonders bevorzugten Ausführungsform der Verwendungsvariante verwendet man ein Mannich-Addukt I.1, worin m für 0 steht , R¹⁰ für H steht und sowohl R¹ als auch R² entweder für C₆-C₁₀-Alkyl, insbesondere für C₈-Alkyl, speziell für 2-Ethylhexyl, oder für eine Gruppe der Formel II stehen, worin R¹¹, R¹², R¹³ und R¹⁴ für H stehen, y für 0 steht, z für eine Zahl von 3 bis 6 steht und R⁶ und R⁷ unabhängig voneinander für H, C₁-C₆-Alkyl oder C₁-C₆-Hydroxyalkyl stehen. Vorzugsweise stehen dabei sowohl R⁶ als auch R⁷ für Methyl, Ethyl, Propyl, Hydroxymethyl oder Hydroxyethyl. Speziell steht z für 3 und R⁶ und R⁷ stehen für Methyl. Gleichfalls bevorzugt ist die Verwendung eines Mannich-Addukts I.1, worin m für 0 oder 1 steht, R⁹ für Methyl steht, R¹⁰ für H steht, R¹ für H steht und R² für eine Gruppe der Formel II steht, worin R¹¹, R¹², R¹³ und R¹⁴ für H stehen, y für 0 steht, z für eine Zahl von 3 bis 6 steht und R⁶ und R⁷ unabhängig voneinander für H, C₁-C₆-Alkyl oder C₁-C₆-Hydroxyalkyl stehen. Vorzugsweise stehen dabei sowohl R⁶ als auch R⁷ für Methyl, Ethyl, Propyl, Hydroxymethyl oder Hydroxyethyl. Speziell steht z für 3 und R⁶ und R⁷ stehen für Methyl, d. h. NR¹R² steht speziell für N[(CH₂)₃N(CH₃)₂]₂.

Die Komponente A, die Komponente B oder deren Gemische können als Kraft- oder Schmierstoffkonzentrate verwendet werden. Dabei liegen die einzelnen Komponenten A oder B bzw. ihr Gemisch in einer Menge von vorzugsweise 0,1 bis 80 Gew.-%, besonders bevorzugt von 10 bis 70 Gew.-% und insbesondere von 30 bis 60 Gew.-% vor. Die Komponente A, die Komponente B oder ihr Gemisch liegen dabei in einem Verdünnungsmittel vor. Geeignete Verdünnungsmittel sind beispielsweise aliphatische und aromatische Kohlenwasserstoffe, wie Solvent Naphtha. Vorzugsweise werden schwefelarme Kohlenwasserstoffe als Verdünnungsmittel verwendet.

Ein weiterer Gegenstand der vorliegenden Erfindung ist ein Verfahren zur Verringerung von Ablagerungen in direkteinspritzenden Otto-Motoren, welches im Worlant des Anspruchs 10 beschrieben wird.

In einer bevorzugten Ausführungsform des Verfahrens wird der Motor zu vorzugsweise mehr als 80 % der Betriebszeit bei einem Lambda-Wert von wenigstens 0,9 bis einschließlich 9, besonders bevorzugt von 0,95 bis 8 und insbesondere von 0,97 bis 6, betrieben.

Kraft-stoffzusammensetzungen für direkteinspritzenden Otto-Motorenkönnen hergestellt werden welch eine Hauptmenge eines Kohlenwasserstoff-Kraftstoffs oder eines Schmierstoffs und eine detergensaktive Menge einer Komponente Beuthalten, wobei diese wie bei Verwendungsvariante 1 definiert ist. Die dort gemachten Aussagen bezüglich der bevorzugten Ausführungsformen der Komponenten B gelten entsprechend. Vorzugsweise enthalten die erfindungsgemäßen Kraft- und Schmierstoffzusammensetzungen die Komponente B in einer Menge von 5 bis 5000 ppm, besonders bevorzugt von 10 bis 1000 ppm und insbesondere von 20 bis 500 ppm.

Als Kraftstoffe können alle handelsüblichen Otto-Kraftstofe eingesetzt werden, die zum Betreiben von direkteinspritzenden Otto-motoren geeignet sind.

In einer bevorzugten Ausführungsform enthalten die Kraft-stoffzusammensetzungen wenigstens ein Mannich-Addukt der Formel I.1 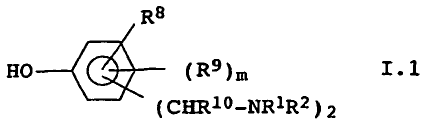 worin
- R⁸: für einen Poly(iso)buten-Rest mit einem zahlenmittleren Molekulargewicht von 300 bis 3000 steht,
- R⁹: für eine C₁-C₆-Alkylgruppe steht,
- R¹⁰: für H oder C₁-C₆-Alkyl steht,
- R¹ und R²: unabhängig voneinander für C₆-C₂₀-Alkyl, C₆-C₂₀-Cycloalyl, 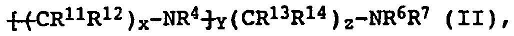 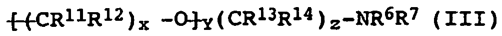 oder 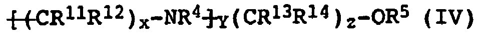 stehen
wobei R⁴, R⁵, R¹¹, R¹², R¹³ und R¹⁴ unabhängig voneinander für H oder C₁-C₆-Alkyl stehen,
R⁶ und R⁷ unabhängig voneinander für H, C₁-C₆-Alkyl oder C₁-C₆-Hydroxyalkyl stehen
x und z unabhängig voneinander für eine Zahl von 1 bis 20 stehen,
y für eine zahl von 0 bis 10 steht und
- m: für 0 oder 1 steht.

Bezüglich der bevorzugten Definitionen für die Variablen R¹ bis R¹⁴ sowie für x, z, y und m gelten die oben gemachten Ausführungen.

Ein Additivkonzentrat kann hergestellt werden, welches, eine Komponente B, wenigstens ein Verdünnungsmittel sowie gegebenenfalls wenigstens einen weiteren zu-satzstoff enthält. Komponente B ist wie bei Verwendungsvariante 1 beschrieben definiert. Die dort gemachten Aussagen bezüglich der bevorzugten Ausführungsformen der Komponenten B gelten entsprechend. Komponente B liegt dabei in einer Menge von vorzugsweise 0,1 bis 80 Gew.-%, besonders bevorzugt von 10 bis 70 Gew.-% und insbesondere von 30 bis 60 Gew.-%, bezogen auf das Gewicht des Konzentrats, vor. Geeignete Verdünnungsmittel sind beispielsweise aliphatische und aromatische Kohlenwasserstoffe, wie Solvent Naphtha. Vorzugsweise werden schwefelarme Kohlenwasserstoffe als Verdünnungsmittel verwendet.

Die Kraft-stoffzusammensetzungen sowie die Kraft-stoffkonzentrate enthalten neben der Komponente B gegebenenfalls weitere üblich Kraft- und Schmierstoffadditive, bevorzugt die nachfolgend beschriebenen Zusatzstoffe.

Als Beispiele für Zusatzstoffe, die in den Kraft- stoffen bzw. in den Konzentraten eingesetzt werden, sind weitere, von Komponente B verschiedene Additive mit Detergenswirkung oder mit ventilsitzverschleißhemmender Wirkung zu nennen, wobei diese mindestens einen hydrophoben Kohlenwasserstoffrest mit einem zahlengemittelten Molekulargewicht (M_{N}) von 85 bis 20 000 und mindestens eine polare Gruppierung, ausgewählt aus
(a) Mono- oder Polyaminogruppen mit bis zu 6 Stickstoffatomen, wobei mindestens ein Stickstoffatom basische Eigenschaften hat,
(b) Hydroxylgruppen in Kombination mit Mono- oder Polyaminogruppen, wobei mindestens ein Stickstoffatom basische Eigenschaften hat,
(c) Carboxylgruppen oder deren Alkalimetall- oder Erdalkalimetallsalzen,
(d) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind,
(e) Carbonsäureestergruppen,
(f) aus Bernsteinsdureanhydrid abgeleitete Gruppierungen mit Hydroxy- und/oder Amino- und/oder Amido- und/oder Imidogruppen und
(g) durch herkömmliche Mannich-Umsetzung von phenolischen Hydroxylgruppen mit Aldehyden und Mono- oder Polyaminen erzeugte Gruppierungen
aufweisen.

Als Beispiele für obige Additivkomponenten mit Detergenswirkung Wirkung seien zu nennen:
Mono- oder Polyaminogruppen (a) enthaltende Additive sind vorzugsweise Polyalkenmono- oder Polyalkenpolyamine auf Basis von Polypropen oder von hochreaktivem (d. h. mit überwiegend endständigen Doppelbindungen - meist in der β- und γ-Position) oder konventionellem (d. h. mit überwiegend mittenständige Doppelbindungen) Polybuten oder Polyisobuten mit M_{N} = 600 bis 5 000, die nicht nach vorstehend beschriebenen Verfahren zur Herstellung von Polyisobutenphenolen erhalten wurden. Derartige Additive auf Basis von reaktivem Polyisobuten, welche aus dem Polyisobuten, welches bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier die gleichen Amine wie oben für die reduktive Aminierung des hydroformylierten reaktiven Polyisobutens eingesetzt werden. Entsprechende Additive auf Basis von Polypropen sind insbesondere in der WO-A 94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A 97/03946 beschrieben sind.

Weitere bevorzugte Monoaminogruppen (a) enthaltende Additive sind die aus Polyisobutenepoxiden durch Umsetzung mit Aminen und nachfolgende Dehydratisierung und Reduktion der Aminoalkohole erhältlichen Verbindungen, wie sie insbesondere in DE-A 196 20 262 beschrieben sind.

Hydroxylgruppen in Kombination mit Mono- oder Polyaminogruppen (b) enthaltende Additive sind insbesondere Umsetzungsprodukte von Polyisobutenepoxiden, erhältlich aus vorzugsweise überwiegend endständige Doppelbindungen aufweisendem Polyisobuten mit M_{N} = 600 bis 5 000, mit Ammoniak, Mono- oder Polyaminen, wie sie insbesondere in EP-A 476 485 beschrieben sind.

Carboxylgruppen oder deren Alkalimetall- oder Erdalkalimetallsalze (c) enthaltende Additive sind vorzugsweise Copolymere von C₂-C₄₀-Olefinen mit Maleinsäureanhydrid mit einer Gesamt-Molmasse von 500 bis 20 000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive können, wie in der WO-A 87/01126 beschrieben, mit Vorteil in Kombination mit üblichen Kraftstoffdetergenzien wie Poly(iso)butenaminen oder Polyetheraminen eingesetzt werden.

Polyoxy-C₂- bis C₄-alkylengruppierungen (d) enthaltende Additive sind vorzugsweise Polyether oder Polyetheramine, welche durch Umsetzung von C₂- bis C₆₀-Alkanolen, C₆- bis C₃₀-Alkandiolen, Mono--oder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (e) enthaltende Additive sind vorzugsweise Ester aus Mono-, Di- oder Tricarbonsäuren mit langkettigen Alkanolen oder Polyolen, insbesondere solche mit einer Mindestviskosität von 2 mm² bei 100 °C, wie sie insbesondere in DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy-und/oder Amino- und/oder Amido- und/oder Imidogruppen (f) enthaltende Additive sind vorzugsweise entsprechende Derivate von Polyisobutenylbernsteinsäureanhydrid, welche durch Umsetzung von konventionellem oder hochreaktivem Polyisobuten mit M_{N} = 300 bis 5 000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Ottokraftstoffadditive sind insbesondere in US-A 4 849 572 beschrieben.

Durch herkömmliche Mannich-Umsetzung von phenolischen Hydroxylgruppen mit Aldehyden und Mono- oder Polyaminen erzeugte Gruppierungen (g) enthaltende Additive entsprechen den zuvor beschriebenen Mannich-Addukten I, wobei die Summe des Molekulargewichts aller NR¹R²-Reste weniger als 120 g/mol beträgt.

Zur genaueren Definition der einzelnen aufgeführten Ottokraftstoffadditive wird hier auf die Offenbarungen der obengenannten Schriften des Standes der Technik ausdrücklich Bezug genommen.

Als Lösungs- oder Verdünnungsmittel (bei Bereitstellung von Additivpaketen und -konzentraten) kommen die vorstehend bei den erfindungsgemäßen Konzentraten genannten Verdünnungsmittel in Betracht, beispielsweise aliphatische und aromatische Kohlenwasserstoffe, wie Solvent Naptha.

Weitere übliche Additivkomponenten, die mit den erfindungsgemäßen Additiven kombiniert werden können, sind beispielsweise Korrosionsinhibitoren, wie z. B. auf Basis von zur Filmbildung neigenden Ammoniumsalzen organischer Carbonsäuren oder von heterocyclischen Aromaten, Antioxidantien oder Stabilisatoren, beispielsweise auf Basis von Aminen wie p-Phenylendiamin, Dicyclohexylamin oder Derivaten davon oder von Phenolen wie 2,4-Di-tert-butylphenol oder 3,5-Di-tert-butyl-4-hydroxyphenylpropionsäure, Demulgatoren, Antistatikmittel, Metallocene wie Ferrocen oder Methylcyclopentadienylmangantricarbonyl, Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl sowie Farbstoffe (Marker). Gegebenenfalls werden auch Amine zur Absenkung des pH-Wertes des Kraftstoffes zugesetzt.

Als weitere übliche Komponenten können auch Trägeröle genannt werden. Hier sind beispielsweise mineralische Trägeröle (Grundöle), insbesondere solche der Viskositätsklasse "Solvent Neutral (SN) 500 bis 2000", synthetische Trägeröle auf Basis von Olefinpolymerisaten mit M_{N} = 400 bis 1 800, vor allem auf Polybuten-oder Polyisobuten-Basis (hydriert oder nicht hydriert), von Polyalphaolefinen oder Polyinternalolefinen sowie synthetische Trägeröle auf Basis alkoxylierter langkettiger Alkohole oder Phenole zu nennen. Ebenfalls geeignet als weitere Additive sind Polyalkenalkohol-Polyetheramine, wie beispielsweise in der DE-199 16 512.2 beschrieben.

Ein' Mannich-Addukt der Formel I.1 kann hargestellt werden 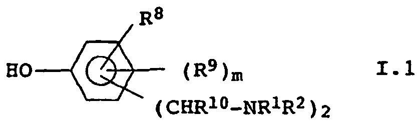 worin
- R⁸: für einen Poly(iso)buten-Rest mit einem zahlenmittleren Molekulargewicht von 300 bis 3000 steht,
- R⁹: für eine C₁-C₆-Alkylgruppe steht,
- R¹⁰: für H oder C₁-C₆-Alkyl steht,
- R¹ und R²: unabhängig voneinander für C₆-C₂₀-Alkyl, C₆-C₂₀-Cycloalyl, 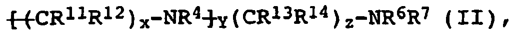 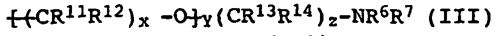 oder 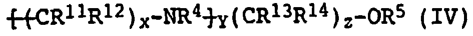 stehen
wobei R⁴, R⁵; R¹¹, R¹², R¹³ und R¹⁴ unabhängig voneinander für H oder C₁-C₆-Alkyl stehen,
R⁶ und R⁷ unabhängig voneinander für H, C₁-C₆-Alkyl oder C₁-C₆-Hydroxyalkyl stehen
x und z unabhängig voneinander für eine Zahl von 1 bis 20 stehen,
y für eine Zahl von 0 bis 5 steht und
- m: für 0 oder 1 steht.

Bezüglich der bevorzugten Reste R⁸ wird auf die obigen Ausführungen verwiesen.

R⁹ steht vorzugsweise für Methyl oder Ethyl, besonders bevorzugt für Methyl.

m steht für 0 oder 1 und speziell für 0.

Bezüglich der bevorzugten Reste R¹ und R² gelten die obigen Ausführungen.

In einer besonders bevorzugten Ausführungsform steht m für 0, R¹⁰ steht für H und sowohl R¹ als auch R² stehen entweder für C₆-C₁₀-Alkyl, insbesondere für C₈-Alkyl, speziell für 2-Ethylhexyl, oder für eine Gruppe der Formel II, worin R¹¹, R¹², R¹³ und R¹⁴ für H stehen, y für 0 steht, z für eine Zahl von 3 bis 6 steht und R⁶ und R⁷ unabhängig voneinander für H, C₁-C₆-Alkyl oder C₁-C₆-Hydroxyalkyl stehen. Vorzugsweise stehen dabei sowohl R⁶ als auch R⁷ für Methyl, Ethyl, Propyl, Hydroxymethyl oder Hydroxyethyl. Speziell steht z für 3 und R⁶ und R⁷ stehen für Methyl. Gleichfalls bevorzugt ist die Verwendung eines Mannich-Addukts I.1, worin m für 0 oder 1 steht, R⁹ für Methyl steht, R¹⁰ für H steht, R¹ für H steht und R² für eine Gruppe der Formel II steht, worin R¹¹, R¹², R¹³ und R¹⁴ für H stehen, y für 0 steht, z für eine Zahl von 3 bis 6 steht und R⁶ und R⁷ unabhängig voneinander für H, C₁-C₆-Alkyl oder C₁-C₆-Hydroxyalkyl stehen. Vorzugsweise stehen dabei sowohl R⁶ als auch R⁷ für Methyl, Ethyl, Propyl, Hydroxymethyl oder Hydroxyethyl. Speziell steht z für 3 und R⁶ und R⁷ stehen für Methyl, d.h. sowohl R¹ als auch R² stehen für N,N-Dimethylaminopropyl.

In einer ebenfalls besonders bevorzugten Ausführungsform stehen die Reste R¹ und R² für einen C₆-C₁₀-Alkylrest, insbesondere für einen C₈-Alkylrest, speziell für 2-Ethylhexyl.

Die erfindungsgemäße Verwendung von Komponente A oder Komponente B oder deren Gemische führt zu einer deutlichen Verringerung der Bildung von Ablagerungen an den Einspritzdüssen von direkteinspritzenden Otto-Motoren.

Die nachfolgenden Beispiele sollen die Erfindung veranschaulichen, ohne sie jedoch einzuschränken.

### Beispiele

### I. Herstellung von 4-Polyisobutenphenol und von 2-Methyl-4-polyisobutenphenol

### 1.1 Herstellung von 4-Polyisobutenphenol

Die Herstellung erfolgte ausgehend von Phenol und Glissopal 1000 nach einem in der DE-OS 19948111 beschriebenen Verfahren.

In einem 4 1-Vierhalskolben wurden 203,9 g Phenol unter Stickstoff bei 40 bis 45 °C aufgeschmolzen. Man tropfte 95,5 g BF₃-Die-thyletheraddukt zu und kühlte auf 20 bis 25 °C. 998 g Polyisobuten mit M_{N} = 1 000 und einem Dimethylvinylidenanteil von 85 %, gelöst in 1 800 ml Hexan, wurden innerhalb von 3 Stunden bei 20 bis 25 °C zugetropft. Man rührte über Nacht nach. Anschließend wurde die Reaktion durch Zugabe von 500 ml 25%iger Ammoniaklösung beendet. Die organische Phase wurde abgetrennt und anschließend 7-mal mit 500 ml Wasser gewaschen, über Na₂SO₄ getrocknet und das Lösungsmittel im Vakuum entfernt: 1 060 g Öl (Polyisobutenphenol).

NMR: 7,2 ppm (Dublett, 2H), 6,7 ppm (Dublett, 2H), 4,8 ppm (Singulett, breit 1H), 1,75 ppm (Singulett, 2H), 1,5-0,5 ppm (Singuletts, 165H).

Dies entspricht einem M_{N} des Alkylrests von 1 150. Im Bereich von 7,1 bis 6,75 befinden sich kleine Signale, die dafür sprechen, dass neben dem Hauptprodukt (p-Polyisobutenphenol) 5 bis 10 % 2,4-substituiertes Phenol entstanden sind, was im Einklang mit der gefundenen geringen Molekulargewichtserhöhung steht.

### I.2 Herstellung von 2-Methyl-4-polyisobutenphenol

Die Herstellung erfolgte ausgehend von Kresol und Glissopal 1000 nach einem in der DE-OS 19948111 beschriebenen Verfahren.

In einem 4 1-Vierhalskolben wurden 234,3 g Kresol unter Stickstoff bei 40 bis 45 °C aufgeschmolzen. Man tropfte 95,5 g BF₃-Di-ethyletheraddukt zu und kühlte auf 20 bis 25 °C. 998 g Polyisobuten mit M_{N} = 1 000 und einem Dimethylvinylidenanteil von 85 %, gelöst in 1 800 ml Hexan, wurden innerhalb von 3 Stunden bei 20 bis 25 °C zugetropft. Man rührte über Nacht nach. Anschließend wurde die Reaktion durch Zugabe von 500 ml 25%iger Ammoniaklösung beendet. Die organische Phase wurde abgetrennt und anschließend 7 Mal mit 500 ml Wasser gewaschen, über Na₂SO₄ getrocknet und das Lösungsmittel im Vakuum entfernt. Man erhielt das 2-Methyl-4-polyisobutenphenol in Form eines Öls.

### II. Umsetzung von Polyisobutenphenolen zu Mannichaddukten I

### II.1 Umsetzung des Polyisobutenphenols aus I.1 mit Paraformaldehyd und N,N-Bis[3-(N',N'-Dimethylamino)propyl]amin

In einem 1 1 Kolben mit Wasserabscheider wurden 219,8 g 4-Polyisobutenphenol aus I.1 in 1000 ml Xylol vorgelegt. Man gab 15,1 g Paraformaldehyd hinzu und erhitzte 1 h auf 90 °C. Anschließend fügte man 93,9 g N,N-Bis[3-(N',N'-Dimethylamino)propyl]amin rasch hinzu, woraufhin 8 ml wässrige Phase abgeschieden wurden. Die Lösung wurde am Rotationsverdampfer bei 145 °C und 5 mbar eingedampft. Man erhielt in einer Ausbeute von 278,4 g ein Produktgemisch aus 10 % monoaminoalkyliertem und 90 % bisaminoalkyliertem Polyisobutylenphenol als helles Öl. Die Identifikation der mono- bzw. bisaminomethylierten Produkte erfolgte mittels der Verschiebung des benzylischen Protons (Aromat-CH₂-NR⁵R⁶) im ¹H-NMR-Spektrum.

### II.2 Umsetzung des Polyisobutenphenols aus I.1 mit Paraformaldehyd und N,N-Di(2-ethylhexyl)amin

Analog zu II.1 setzte man das Polyisobutenphenol aus I.1 mit Paraformaldehyd und N,N-Di(2-ethylhexyl)amin in einem Molverhältnis von 1:1,2:1,2 um. Die Umsetzung ergab ein Produktgemisch aus 90 % monoaminoalkyliertem und 4 % bisaminoalkyliertem Polyisobutenphenol.

### II.3 Umsetzung des Polyisobutenphenols aus I.1 mit Paraformaldehyd und N,N-Di(2-ethylhexyl)amin

Analog zu II.1 setzte man das Polyisobutenphenol aus I.1 mit Paraformaldehyd und N,N-Di(2-ethylhexyl)amin in einem Molverhältnis von 1:2,4:2,4 um. Die Umsetzung ergab ein Produktgemisch aus 20 % monoaminoalkyliertem und 80 % bisaminoalkyliertem Polyisobutylenphenol.

### II.4 Umsetzung des Polyisobutenkresols aus I.2 mit Paraformaldehyd und N',N'-3-(Dimethylamino)propylamin

Analog zu II.1 setzte man N',N'-3-(Dimethylamino)propylamin mit dem Polyisobutenkresol aus I.2 in einem Verhältnis von Kresol zu Amin zum Aldehyd von 1:1:1 um. Man erhielt das monoaminomethylierte Kresol in einer Ausbeute von 80 %. Bisaminomethyliertes Kresol wurde nicht erhalten.

### III. Motorentests

### Testmotor:

Als Testmotor wurde ein moderner direkteinspritzender Otto-Motor verwendet, dessen Zylindergeometrie so ausgestaltet ist, dass eine gleichmäßige Kraftstoffverteilung stattfindet. Die Versuche wurden im Magerbereich durchgeführt.

| | |
|---|---|
| Typ: | Vier-Zylinder, Viertakt, 2,0 1 |
| Hubraum: | 1998 cm³ |
| Zündkerzen/Zylinder: | 1 |
| Ventile/Zylinder: | 4 |
| Bohrung: | 86 mm |
| Hub: | 86 mm |
| Einspritzsystem: | Common Rail Hochdruck DI |
| Einspritzdruck: | ca. 100 bar |
| Temperatur der Kühlflüssigkeit: 90 °C | |
| Öltemperatur: | 94 °C |
| Testzyklus: | M 102 E (CEC F-05-A-93), 100 h |
| Kraftstoff: schwefelfreier Superplus gemäß DIN EN 228 | |

Der Kraftstoff wurde mit 5 verschiedenen Additivpaketen versetzt und dem o.g. Testzyklus unterworfen. Anschließend wurde das Aussehen im Inneren der Einspritzdüse bewertet.

Additivpakete: Alle Additivpakete enthielten neben den angegebenen Additiven als Lösungsmittel ein Gemisch aus Xylol und C₁₁-C₁₄-Paraffinen.

| | | |
|---|---|---|
| Additivpaket 1 | - 39 Gew.-% | Mannich-Addukt a* |
| (Vergleich) | - 17 Gew.-% | Polypropoxylat-Fettalkoholether |
| | - 44 Gew.-% | Lösungsmittel |
| Additivpaket 2 | - 39 Gew.-% | Mannich-Addukt b** |
| (Vergleich) | - 17 Gew.-% | Polypropoxylat-Fettalkoholether |
| | - 44 Gew.-% | Lösungsmittel |
| Additivpaket 3 | - 39 Gew.-% | Mannich-Addukt c*** |
| | - 17 Gew.-% | Polypropoxylat-Fettalkoholether |
| | - 44 Gew.-% | Lösungsmittel |
| Additivpaket 4 | - 9 Gew.-% | Tridecylamin |
| | - 36 Gew.-% | Mannich-Addukt a* |
| | - 15 Gew.-% | Polypropoxylat-Fettalkoholether |
| | - 40 Gew.-% | Lösungsmittel |
| Additivpaket 5 | - 9 Gew.-% | Ethylhexylamin |
| | - 36 Gew.-% | Mannich-Addukt a* |
| | - 15 Gew.-% | Polypropoxylat-Fettalkoholether |
| | - 40 Gew.-% | Lösungsmittel |

| | | |
|---|---|---|
| * Mannich-Addukt a: Mannich-Addukt der Formel I mit m = 0 n = 1 R⁸ = von reaktivem Polyisobuten abgeleiteter Rest R¹⁰ = H R¹, R² = Methyl Das Mannich-Addukt a ist durch Umsetzung des Polyisobutenphenols aus Beispiel I.1 mit Formaldehyd und Dimethylamin in etwa äquimolaren Mengen erhältlich. ** Mannich-Addukt b: Mannich-Addukt der Formel I mit m = 0 n = 1 R⁸ = von niedrigreaktivem Polyisobutene abgeleiteter Rest R¹⁰ = H R¹ = H R² = 3-N,N-Dimethylaminopropyl Das Mannich-Addukt b ist durch Umsetzung gemäß WO 01/42399, S. 16 erhältlich. *** Mannich-Addukt c: Mannich-Addukt der Formel I mit m = 0 n = 2 R⁸ = von reaktivem Polyisobuten abgeleiteter Rest R¹⁰ = H R¹, R² = 3-N,N-Dimethylaminopropyl | | |

Das Mannich-Addukt c ist durch Umsetzung nach II.1 erhältlich.

| Additivpaket Nr. | Dosierrate [mg/kg] | Aussehen im Inneren der Einspritzdüsen |
|---|---|---|
| - | - | starke Ablagerungen |
| 1 | 500 | starke Ablagerungen |
| 2 | 500 | starke Ablagerungen |
| 3 | 500 | sauber |
| 4 | 550 | sauber |
| 5 | 550 | leichte Ablagerungen |

Wie der Motorentest zeigt, verhindern die in den Additivpaketen 3 bis 5 erfindungsgemäß verwendeten Komponenten A und B im Gegensatz zu Additiven des Standes der Technik im Wesentlichen die Entstehung von Ablagerungen im Motorraum von direkteinspritzenden Otto-Motoren.

## Patentansprüche

1. Verwendung
- einer Komponente B, enthaltend wenigstens ein Mannich-Addukt der Formel I 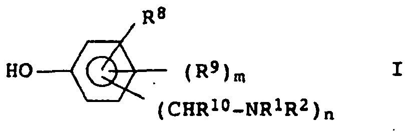 worin
R¹ und R² jeweils unabhängig wie R¹, R² und R³ der Komponente A definiert sind,
R⁸ für einen Polyisobuten-Rest steht,
R⁹ für eine C₁-C₆-Alkylgruppe steht,
R¹⁰ für für H oder C₁-C₆-Alkyl steht,
m für eine Zahl von 0 bis (4-n) steht und
n für eine Zahl von 1 bis 3 steht,
- oder eines gemischs der komponente B mit einer Komponente A, enthaltend wenigstens ein Amin der Formel NR¹R²R³, worin
jedes R¹, R² und R³ jeweils unabhängig für H, C₁-C₂₀-Alkyl oder C₃-C₂₀-Cycloalkyl steht, wobei zwei Alkylreste gemeinsam mit dem Stickstoffatom, an das sie gebunden sind, einen Ring bilden können und wobei die Alkyl- und die Cycloalkylreste durch eine oder mehrere Gruppen, die ausgewählt sind unter O und NR⁴ unterbrochen und/oder durch eine oder mehrere Gruppen OR⁵ oder NR⁶R⁷ substituiert sein können, wobei R⁴, R⁵, R⁶ und R⁷ unabhängig voneinander wie R¹, R² und R³ definiert sind,
und/oder
und wobei bei der Komponenten A das Molekulargewicht des Amins NR¹R²R³ und/oder bei der Komponente B die Summe der Molekulargewichte der Reste NR¹R² 120 bis 1000 g/mol beträgt, als Detergenzien und/oder Dispergatoren in Kräft stoffzusammensetzungen für direkteinspritzende Ottomotoren, die in einem Lambda-Bereich von 0,9 bis 9 betrieben werden.

2. Verwendung nach Anspruch einem der Ansprüche 1 oder 2 einer Komponente A und einer Komponente B.

3. Verwendung nach einem der Ansprüche 1 oder 2, wobei bei der Komponente A das Molekulargewicht des Amins NR¹R²R³ und/oder bei der Komponente B die Summe der Molekulargewichte der Reste NR¹R² 180 bis 600 g/mol beträgt.

4. Verwendung nach einem der vorhergehenden Ansprüche, wobei die Reste R¹, R² und R³ in den Komponenten A und B unabhängig voneinander für H, C₆-C₂₀-Alkyl, C₆-C₂₀-Cycloalkyl, 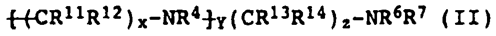 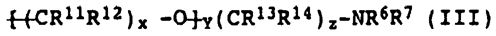 oder 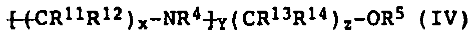 stehen
wobei R⁴, R⁵, R¹¹, R¹², R¹³ und R¹⁴ unabhängig voneinander für H oder C₁-C₆-Alkyl stehen,
R⁶ und R⁷ unabhängig voneinander für H, C₁-C₆-Alkyl oder C₁-C₆-Hydroxyalkyl stehen
x und z unabhängig voneinander für eine Zahl von 1 bis 20 stehen und
y für eine Zahl von 0 bis 10 steht.

5. Verwendung nach einem der vorhergehenden Ansprüche, wobei R⁸ für einen Polyisobuten-Rest steht, der sich von reaktiven Polyisobutenen ableitet.

6. Verwendung nach einem der vorhergehenden Ansprüche, wobei in Komponente B R⁸ in p-Position zur OH-Gruppe steht.

7. Verwendung nach einem der vorhergehenden Ansprüche, wobei Komponente A und Komponente B in einem Gewichtsverhältnis von 20:1 bis 1:20 eingesetzt werden.

8. Verwendung nach einem der vorhergehenden Ansprüche in Form eines Kraft toffkonzentrats, enthaltend eine Komponente A und/oder eine Komponente B in einer Menge von 0,1 bis 80 Gew.-%.

9. Verwendung nach einem der vorhergehenden Ansprüche, wobei als Komponente B wenigstens ein Mannich-Addukt der Formel I.1 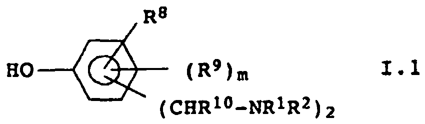 eingesetzt wird, worin
R⁸ für einen Polyisobuten-Rest mit einem zahlenmittleren Molekulargewicht von 300 bis 3000 steht,
R⁹ für eine C₁-C₆-Alkylgruppe steht,
R¹⁰ für H oder C₁-C₆-Alkyl steht,
R¹ und R² unabhängig voneinander für C₆-C₂₀-Alkyl, C₆-C₂₀-Cycloalyl, 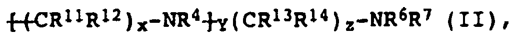 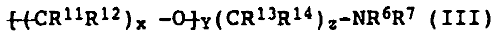 oder 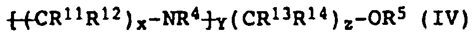 stehen
wobei R⁴, R⁵, R¹¹, R¹², R¹³ und R¹⁴ unabhängig voneinander für H oder C₁-C₆-Alkyl stehen,
R⁶ und R⁷ unabhängig voneinander für H, C₁-C₆-Alkyl oder C₁-C₆-Hydroxyalkyl stehen
x und z unabhängig voneinander für eine Zahl von 1 bis 20 stehen,
y für eine Zahl von 0 bis 10 steht und
m für 0 oder 1 steht.

10. Verfahren zur Verringerung von Ablagerungen in direkteinspritzenden Ottomotoren, bei dem man einen Kraftstoff bereitstellt, der eine Komponente Balleine oder im gemisch mit der komponent A die wie in einem der vorhergehenden Ansprüche definiert sind, umfasst und bei dem der direkteinspritzende Ottomotor bei einem Lambda-Wert von 0,9 bis 9 betrieben wird.

11. Verfahren nach Anspruch 10, bei dem der Kraftstoff eine Komponente A und eine Komponente B umfasst.

## Claims

1. The use of
- a component B comprising at least one Mannich adduct of the formula I 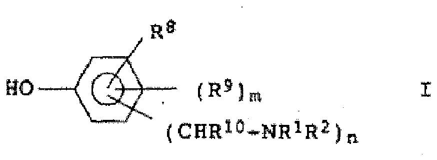 where
R¹ and R² are each independently as defined for R¹, R² and R³ of component A,
R⁸ is a polyisobutene radical,
R⁹ is a C₁-C₆-alkyl group,
R¹⁰ is H or C₁-C₆-alkyl,
m is a number from 0 to (4-n) and
n is a number from 1 to 3,
- or of a mixture of component B with a component A comprising at least one amine of the formula NR¹R²R³ where
each R¹, R² and R³ is independently H, C₁-C₂₀-alkyl or C₃-C₂₀-cycloalkyl, and two alkyl radicals together with the nitrogen atom to which they are bonded may form a ring and the alkyl and the cycloalkyl radicals may be interrupted by one or more groups selected from O and NR⁴ and/or may be substituted by one or more OR⁵ or NR⁶R⁷ groups where R⁴, R⁵, R⁶ and R⁷ are each independently as defined for R¹, R² and R³,
and where the molecular weight of the amine NR¹R²R³ in component A and/or the sum of the molecular weights of the radicals NR¹R² in component B is from 120 to 1000 g/mol,
as detergents and/or dispersants in fuel compositions for direct-injection gasoline engines which are operated within a lambda range of from 0.9 to 9.

2. The use according to claim 1 of a component A and a component B.

3. The use according to either of claims 1 and 2, wherein the molecular weight of the amine NR¹R²R³ in component A and/or the sum of the molecular weights of the radicals NR¹R² in component B is from 180 to 600 g/mol.

4. The use according to any of the preceding claims, wherein the radicals R¹, R² and R³ in components A and B are each independently H, C₆-C₂₀-alkyl, C₆-C₂₀-cycloalkyl, 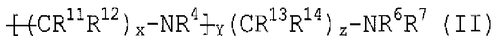 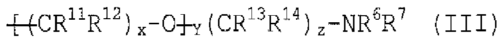 or 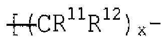 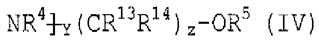 where R⁴, R⁵, R¹¹, R¹², R¹³ and R¹⁴ are each independently H or C₁-C₆-alkyl,
R⁶ and R⁷ are each independently H, C₁-C₆-alkyl or C₂-C₆-hydroxyalkyl,
x and z are each independently a number from 1 to 20 and
y is a number from 0 to 10.

5. The use according to any of the preceding claims, wherein R⁸ is a polyisobutene radical which is derived from reactive polyisobutenes.

6. The use according to any of the preceding claims, wherein R⁸ in component B is in the p-position to the OH group.

7. The use according to any of the preceding claims, wherein component A and component B are used in a weight ratio of from 20:1 to 1:20.

8. The use according to any of the preceding claims in the form of a fuel concentrate comprising a component A and/or a component B in an amount of from 0.1 to 80% by weight.

9. The use according to any of the preceding claims, using as component B at least one Mannich adduct of the formula I.1 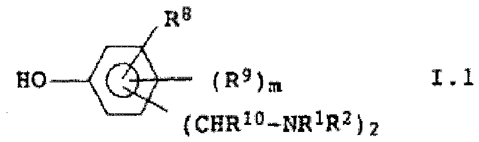 where
R⁸ is a polyisobutene radical which has a number-average molecular weight of from 300 to 3000,
R⁹ is a C₁-C₆-alkyl group,
R¹⁰ is H or C₁-C₆-alkyl,
R¹ and R² are each independently C₆-C₂₀-alkyl, C₆-C₂₀-cycloalkyl, 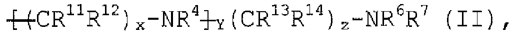 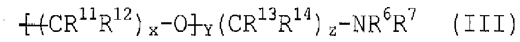 or 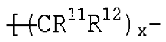 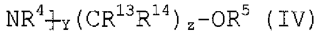 where R⁴, R⁵, R¹¹, R¹², R¹³ and R¹⁹ are each independently H or C₁-C₆-alkyl, R⁶ and R⁷ are each independently H, C₁-C₆-alkyl or C₁-C₆-hydroxyalkyl, x and z are each independently a number from 1 to 20, y is a number from 0 to 10 and
m is 0 or 1.

10. A process for reducing deposits in direct-injection gasoline engines by providing a fuel which comprises a component B alone or in a mixture with component A as defined in any of the preceding claims and in which the direct-injection gasoline engine is operated at a lambda value of from 0.9 to 9.

11. The process according to claim 10, in which the fuel comprises a component A and a component B.

## Revendications

1. Utilisation
- d'un composant B, contenant au moins un produit d'addition de Mannich de formule I 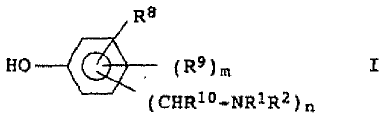 où
R¹ et R² sont définis, à chaque fois indépendamment, comme R¹, R² et R³ du composant A,
R⁸ représente un radical de polyisobutène,
R⁹ représente un groupe C₁-C₆-alkyle,
R¹⁰ représente H ou C₁-C₆-alkyle,
m vaut un nombre de 0 à (4-n), et
n vaut un nombre de 1 à 3,
- ou d'un mélange du composant B avec un composant A, contenant au moins une amine de formule NR¹R²R³, dans laquelle
chaque R¹, R² et R³ représente, à chaque fois indépendamment, H, C₁-C₂₀-alkyle ou C₃-C₂₀-cycloalkyle, deux radicaux alkyle pouvant former,
ensemble avec l'atome d'azote auquel ils sont liés, un cycle et les radicaux alkyle et cycloalkyle pouvant être interrompus par un ou plusieurs groupes choisis parmi O et NR⁴ et/ou substitués par un ou plusieurs groupes OR⁵ ou NR⁶R⁷, R⁴, R⁵, R⁶ et R⁷ étant définis,
indépendamment l'un de l'autre, comme R¹, R² et R³,
et, pour le composant A, le poids moléculaire de l' amine NR¹R²R³ et/ou pour le composant B, la somme des poids moléculaires des radicaux NR¹R² valant 120 à 1000 g/mole, comme détergents et/ou dispersants dans des compositions pour carburant pour les moteurs à essence à injection directe qui sont exploités dans une plage lambda de 0,9 à 9.

2. Utilisation selon la revendication 1 d'un composant A et d'un composant B.

3. Utilisation selon l'une quelconque des revendications 1 ou 2, pour le composant A, le poids moléculaire de l'amine NR¹R²R³ et/ou pour le composant B, la somme des poids moléculaires des radicaux NR¹R² valant 180 à 600 g/mole.

4. Utilisation selon l'une quelconque des revendications précédentes, les radicaux R¹, R² et R³ dans les composants A et B représentant, indépendamment l'un de l'autre. H, C₆-C₂₀-alkyle, C₆-C₂₀-cycloalkyle, 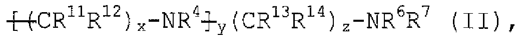 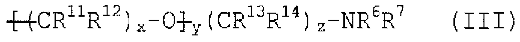 ou 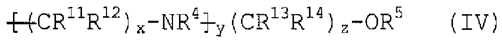 où
R⁴, R⁵, R¹¹, R¹², R¹³ et R¹⁴ représentent, indépendamment l'un de l'autre, H ou C₁-C₆-alkyle,
R⁶ et R⁷ représentent, indépendamment l'un de l'autre, H, C₁-C₆-alkyle ou C₁-C₆-hydroxyalkyle,
x et z valent, indépendamment l'un de l'autre, un nombre de 1 à 20 et
y vaut un nombre de 0 à 10.

5. Utilisation selon l'une quelconque des revendications précédentes, R⁸ représentant un radical polyisobutène, qui est dérivé de polyisobutènes réactifs.

6. Utilisation selon l'une quelconque des revendications précédentes, R⁸ dans le composant B se trouvant en position para par rapport au groupe OH.

7. Utilisation selon l'une quelconque des revendications précédentes, le composant A et le composant B étant utilisés dans un rapport pondéral de 20:1 à 1:20.

8. Utilisation selon l'une quelconque des revendications précédentes sous forme d'un concentrat pour carburant, contenant un composant A et/ou un composant B en une quantité de 0,1 à 80% en poids.

9. Utilisation selon l'une quelconque des revendications précédentes, en utilisant comme composant B au moins un produit d'addition de Mannich de formule I.1 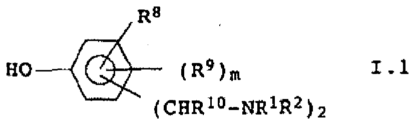 où
R⁸ représente un radical polyisobutène présentant un poids moléculaire numérique moyen de 300 à 3000,
R⁹ représente un groupe C₁-C₆-alkyle,
R¹⁰ représente H ou C₁-C₆-alkyle,
R¹ et R² représentent, indépendamment l'un de l'autre C₆-C₂₀-alkyle, C₆-C₂₀-cycloalkyle, 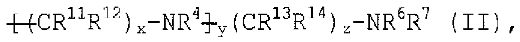 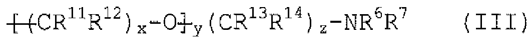 ou 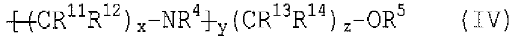 où
R⁴, R⁵, R¹¹, R¹², R¹³ et R¹⁴ représentent, indépendamment l'un de l'autre, H ou C₁-C₆-alkyle,
R⁶ et R⁷ représentent, indépendamment l'un de l'autre, H, C₁-C₆-alkyle ou C₁-C₆-hydroxyalkyle,
x et z valent, indépendamment l'un de l'autre, un nombre de 1 à 20,
y vaut un nombre de 0 à 10, et
m vaut 0 ou 1.

10. Procédé pour la diminution de dépôts dans les moteurs à essence à injection directe, dans lequel on prépare un carburant, qui comprend un composant B seul ou en mélange avec le composant A, qui sont définis comme dans l'une quelconque des revendications précédentes et dans lequel le moteur à essence à injection directe est exploité à une valeur lambda de 0,9 à 9.

11. Procédé selon la revendication 10, dans lequel le carburant comprend un composant A et un composant B.
